# NEUE EUROPÄISCHE PATENTSCHRIFT

(11) **EP 0 626 472 B2**
(45) Veröffentlichungstag und Bekanntmachung des Hinweises auf die Entscheidung über den Einspruch: **29.12.1999**
(45) Hinweis auf die Patenterteilung: 28.05.1997
(21) Anmeldenummer: 94104052.9
(22) Anmeldetag: 16.03.1994
(51) Int. Cl.: D01H 13/22

(54) **Vorrichtung zur Messung der Stärke eines Faserverbandes mit einer Bandführung zum Führen der Faserbänder am Streckwerkseinlauf**
Device for measuring the thickness of a fibre formation with a sliver guide for guiding the slivers at the entry of the drawing frame
Dispositif pour mesurer l'épaisseur d'une matière fibreuse avec un guide-mèche pour guider la mèche à l'entrée du système d'étirage

(30) Priorität: 02.04.1993 DE 4310820; 11.02.1994 DE 4404326
(43) Veröffentlichungstag der Anmeldung: 30.11.1994
(73) Patentinhaber: Trützschler GmbH & Co. KG, 41199 Mönchengladbach (DE)
(72) Erfinder: Leifeld, Ferdinand, D-47906 Kempen (DE)

(56) Entgegenhaltungen:
- EP-A- 0 460 442
- WO-A-87/04472
- WO-A-91/16595
- CH-A- 635 373
- CH-A- 668 833
- DE-A- 3 913 548
- FR-A- 2 183 903

## Beschreibung

Die Erfindung betrifft eine Vorrichtung zur Messung der Stärke eines Faserverbandes mit einer Bandführung zum Führen der Faserbänder am Streckwerkseinlauf, deren Wände mindestens teilweise konisch, die einlaufenden Faserbänder in einer Ebene zusammenführend ausgebildet sind und der ein Walzenpaar nachgeordnet ist, nach dem die Faserbänder wieder auseinanderlaufen, bei der ein belastetes, ortsbewegliches Tastelement vorhanden ist, das mit einer ortsfesten Gegenfläche eine Engstelle für den durchlaufenden, aus Faserbändern bestehenden Faserverband bildet und dessen Lageänderung bei unterschiedlicher Stärke des Faserverbandes auf eine Wandlereinrichtung zur Erzeugung eines Steuerimpulses einwirkt.

Bei einer aus der WO-A-9 116 595 bekannten Vorrichtung ist eine Einrichtung zum Führen der Bänder am Streckwerkseinlauf vorhanden. Die Einrichtung umfaßt ein konisch zulaufendes Auflageblech für die Faserbänder mit seitlich aufgebogenen Wandflächen, dem die Bandführung mit rechteckigem Eintrittsquerschnitt, flach zueinander angeordneter Deck- und Bodenfläche und konisch zulaufenden Seitenflächen nachgeordnet ist. Die nebeneinander angeordneten, einlaufenden Faserbänder gleiten über die aus Auflageblech und Bodenwand der Bandführung gebildete Auflagefläche hinweg. Zwischen den einlaufenden Faserbändern und den Seitenwänden im Einlaufbereich ist jeweils ein Zwischenraum vorhanden. Die Bandführung liegt unmittelbar vor einem Abzugswalzenpaar, dessen parallele Achsen senkrecht ausgerichtet sind. Das Walzenpaar dient zugleich zur Messung einer in einem vorgegebenen Toleranzbereich liegenden Dicke des Faserverbandes und ist in Abhängigkeit von der Dicke des zu messenden Faserverbandes abstandsveränderbar angeordnet. Die bewegliche, federbelastete Walze als belastetes, ortsbewegliches Tastelement ist in bezug auf die ortsfeste Walze in horizontaler Richtung ortsveränderbar. Die ortsfeste Walze besteht aus drei Scheiben, deren mittlere einen geringeren Durchmesser als die beiden äußeren aufweist, wodurch die Umfangsfläche als Nut ausgebildet ist (Nutwalze). Die bewegliche Walze (Federwalze) besteht aus einer Scheibe, die mit ihrem Umfangsbereich in die Nut der ortsfesten Walze eingreift. Die Umfangsfläche der mittlerenScheibe der Nutwalze bildet die ortsfeste Gegenfläche für die Umfangsfläche der beweglichen Federwalze. Durch die Nut-Feder-Ausbildung ist eine im wesentlichen rechteckförmige Engstelle gebildet, zwischen der der Faserverband aus zusammengedrückten Faserbändern zur Messung hindurchgeführt wird. Im Betrieb laufen die Einzelbänder am Streckwerkseinlauf mit einer Geschwindigkeit z. B. von 150 m/min in die Bandführung ein Durch die konisch zulaufende Ausbildung der Bandführung werden die Faserbänder in einer Ebene seitlich nebeneinander ohne Klemmung zusammengeführt. Die aus der Bandführung austretenden Faserbänder werden erst durch den Einzug in den nachfolgenden Walzenspalt verdichtet, d. h auf den Substanzquerschnitt komprimiert und insbesondere die Luft herausgepreßt, so daß eine Messung erfolgen kann Die Umfangsgeschwindigkeit der Walzen und die Bandlaufgeschwindigkeit sind dabei gleich, so daß keine Relativgeschwindigkeit zwischen den Walzen und den Faserbändern vorliegt. Es soll die Klemmwirkung, die für den Abzug notwendig ist, zugleich als Verdichtung für die Messung herangezogen werden. Nach Austritt aus dem Walzenspalt laufen die Faserbänder wieder einzeln in seitlicher Richtung auseinander, um in das nachgeschaltete Streckwerk einzulaufen. Die bekannte Vorrichtung ist konstruktiv und anlagemäßig in erheblichem Maße aufwendig. Die Nut-Feder-Ausbildung der Meßwalzen muß paßgenau gefertigt und bei der Montage genau aufeinander ausgerichtet werden. Die mittlere Scheibe der Nutwalze und die Federwalze erfordern jeweils hohe Fertigungsgenauigkeit (geringe Toleranz): Der Durchmesser der beiden Scheiben muß gleich sein, damit die Umfangsgeschwindigkeit zur Vermeidung eines Verzuges der Bänder gleich ist. Außerdem müssen beide Scheiben eine hohe Rundlaufgenauigkeit zur Vermeidung von Meßfehlern aufweisen. Sofern die Nut- und Federwalze nur gering verkantet zueinander sind, entstehen Meßfehler. Außerdem stört, daß beim Beschleunigen und Abbremsen der Walzen Fliehkräfte auftreten, die zu Fehlmessungen führen. Ein weiterer Nachteil besteht darin, daß auch der Antrieb der beiden Walzen konstruktiv aufwendig ist. Nachteilig ist insbesondere, daß ein Drehantrieb für eine ortsveränderliche Walze eingesetzt werden muß. Weiterhin stört, daß beide Walzen angetrieben werden müssen. Für die schwenkbare Walze erfolgt dies mittels eines Stirnzahnradpaares, von denen eines auf der Welle der Walze, das andere koaxial zur Schwenkachse des Schwenkarmes angeordnet ist, welche insoweit als Vorlegewelle dient. Dadurch wird erreicht, daß der Eingriff des Zahnradpaares auch beim Schwenken des Schwenkarmes unveränderbar bleibt. Um den erforderlichen, entgegengesetzten Drehsinn der Walzen zu erreichen, muß ein weiteres Zahnrad als Verzahnungszwischenelement eingeschaltet werden, wobei sich, wie vorstehend ausgeführt, neben einem hohen baulichen Aufwand auch der Nachteil der sich addierenden, zu Ungenauigkeiten führenden Zahnspiele zwischen den einzelnen Zahnrädem ergibt.

Die DE-A- 39 13 548 beschreibt eine Vorrichtung zur Messung der Stärke eines einzelnen Faserbandes mit einem Bandtrichter am Ausgang einer Karde. Die Druckschrift offenbart keine Bandführung am Streckwerkseingang, sondem einen Bandtrichter, die sich beide konstruktiv und funktionell erheblich unterscheiden. Durch den kreisrunden Bandtrichter wird nur ein Kardenband durchgeführt. Durch die allseits konische, kegelstumpfförmige kreisrunde Innenwandfläche und den engen Ausgang des Trichters wird das Kardenband stark komprimiert. Die Abzugswalzen dienen dem Abzug des einen Kardenbandes aus dem Bandtrichter. Innerhalb des Bandtrichters reibt das einzige Kardenband allseitig an der Innenwandfläche des Bandtrichters.

Der Erfindung liegt die Aufgabe zugrunde, eine Vorrichtung der eingangs beschriebenen Art zu schaffen, die die genannten Nachteile vermeidet, die insbesondere konstruktiv einfach ist und eine verbesserte Messung des Faserverbandes am Streckwerkseinlauf ermöglicht.

Die Lösung dieser Aufgabe erfolgt durch die kennzeichnenden Merkmale des Anspruchs 1.

Durch die erfindungsgemäße Vorrichtung werden die Faserbänder bereits in der Bandführung verdichtet und abgetastet, so daß der die Bandführung nachgeschalteten Walzen den bereits abgetasteten Faserverband nur noch abziehen. Diese Maßnahmen ermöglichen eine Funktionstrennung dadurch, daß das den Abzugswalzen vorgelagerte Tastelement auf einfache Art die Faserbänder zugleich verdichtet und abtastet. Die nachgeschalteten Walzen können dadurch, daß sie nur noch Abzugswalzen sind, konstruktiv und montagemäßig wesentlich einfacher gestaltet werden. Insbesondere durch den Wegfall der Meßfunktion werden die bei der bekannten Vorrichtung vorhandenen erheblichen Probleme und der Aufwand bei der Messung vermieden. Auf diese Weise erfahren die Faserbänder eine gestufte Behandlung in bezug auf die für eine Abtastung erforderliche Verdichtung und bezüglich der für den Abzug erforderlichen Verdichtung. Erfindungsgemäß ist eine Vorrichtung geschaffen, die konstruktiv und montagemäßig wesentich vereinfacht ist und eine verbesserte Messung des Faserverbandes am Streckwerkseinlauf gestattet.

Bevorzugt ist das bewegliche Tastelement der Bandführung im Bereich der in der Engstelle nebeneinander zusammengeführten Faserbänder zugeordnet und weist eine Gleitfläche auf, die die Faserbänder nebeneinander verdichtend gegen die ortsfeste Gegenfläche der Bandführung drückt und das Walzenpaar die in der Engstelle zusammengedrückten abgetasteten Faserbänder nebeneinander abzieht. Vorteilhaft ist der Abstand (a) zwischen dem beweglichen Tastelement und dem Klemmpunkt des Walzenpaares gleich oder kleiner als die Stapellänge des Fasermaterials. Zweckmäßig ist der Abstand (b) zwischen dem Ausgang der Bandführung und dem Klemmpunkt des Walzenpaares gleich oder kleiner als die Stapellänge des Fasermaterials. Bevorzugt ist das Tastelement horizontal und rechtwinklig in bezug auf die Bandlaufrichtung beweglich. Vorteilhaft ist das Tastelement vertikal und rechtwinklig in bezug auf die Bandlaufrichtung beweglich. Zweckmäßig weist die Bandführung mindestens eine Offnung auf, wobei das Tastelement die Offnung durchgreift. Bevorzugt liegt der Ausgang der Bandführung unmittelbar vor dem Walzenspalt der Abzugswalzen. Vorteilhaft ist die Engstelle unmittelbar vor dem Ausgang der Bandführung angeordnet. Zweckmäßig ist die Abzugskraft höher als die Meßkraft. Bevorzugt ist die Offnung eine Aussparung. Vorteilhaft ist die Aussparung etwa rechteckig. Zweckmäßig ist das Tastelement ein etwa rechteckiges Fühlelement, dessen lange Kanten in Breitenrichtung und dessen kurzen Kanten in Arbeitsrichtung verlaufen. Bevorzugt ist das äußere Ende des Tastelements in geringem Abstand zum Ausgang der Bandführung in Richtung auf die Abzugswalzen angeordnet. Vorteilhaft ist das Tastelement an einem ortsfesten Drehlager gelagert. Zweckmäßig wirkt ein Hebel des Drehlagers mit einem Kraftelement, z. B. Gegengewicht, Feder o. dgl., zusammen. Bevorzugt ist das Tastelement in horizontaler Richtung beweglich gelagert. Vorteilhaft ist das Tastelement an seinem einen Ende federnd gelagert. Zweckmäßig ist das Tastelement an einem Halteglied, z. B. Hebel, gelagert. Bevorzugt ist das Tastelement um eine vertikale Achse drehbar gelagert. Vorteilhaft weist das Tastelement mindestens ein induktives Meßelement mit Tauchkern und Tauchspule auf. Zweckmäßig ist das Meßelement ein analog arbeitender berührungsloser Abstandssensor, z B. induktiver Näherungsinitiator. Bevorzugt ist dem Tastelement ein Anschlag zugeordnet. Vorteilhaft ist das Tastelement durch mindestens eine Kraft belastet und abgestützt. Zweckmäßig ist die Engstelle nach Art einer Fotoblende, also als Blendenverschluß mit inneren Gleitflächen ausgebildet. Vorteilhaft durchsetzt das beweglich gelagerte Tastelement einen entsprechenden Durchbruch der Wandung der Bandführung und belastet mit einer Gleitfläche den jeweiligen Faserverband bis nahe an den Substanzquerschnitt. Bevorzugt weist die Engstelle zwei zueinander parallele Flächen auf, zwischen die ein Teil des beweglich gelagerten Tastelements eingepaßt ist. Vorteilhaft verläuft die dem beweglich gelagerten Tastelement gegenüberliegende Wandung rechtwinklig zu den parallelen Flächen. Zweckmäßig erfolgt die Vorspannung des beweglich gelagerten Tastelements durch mechanische, elektrische, hydraulische oder pneumatische Mittel, z. B. Federn, Gewichte, Eigenfederung, Belastungszylinder, Magnete o. dgl. die einstellbar sein können. Bevorzugt ist das beweglich gelagerte Tastelement als Winkelhebel ausgebildet, der etwa im Knickpunkt in der Aussparung der Bandführung gelagert ist, wobei entweder der Winkelhebel oder die Bandführung ortsfest gelagert ist und der Winkelhebel federbelastet ist. Vorteilhaft liegt die den Winkelhebel belastende Feder mit ihrem freien Ende an einem fein einstellbaren Widerlager an. Zweckmäßig sind die Achsen der Abzugswalzen horizontal angeordnet. Bevorzugt sind die Achsen der Abzugswalzen vertikal angeordnet. Vorteilhaft ist der Bandführung eine weitere Bandführung vorgeschaltet, wobei der Bereich zwischen den beiden Bandführungen mit der Außenluft über mindestens eine Offnung in Verbindung steht. Zweckmäßig weist die Bandführung mindestens eine Entlüftungsöffnung auf. Bevorzugt weist der Ausgang der Bandführung einen Rechteckquerschnitt auf. Zweckmäßig reicht der Ausgang der Bandführung bis in den Walzenspalt zwischen den Abzugswalzen. Bevorzugt sind die Seitenwände der Wandführung in Bandlaufrichtung konisch zusammenlaufend ausgebildet. Vorteilhaft sind die Bodenwand und die Deckenwand der Bandführung in Bandlaufrichtung konisch zusammenlaufend ausgebildet. Zweckmäßig ist das dem Tastelement gegenüberliegende ortsfeste Wandelement z. B. durch eine Einstellschraube lageveränderbar. Bevorzugt ist das Tastelement trapezförmig ausgebildet. Vorteilhaft ist die Gleitfläche des Tastelements konvex gebogen bzw. gerundet. Zweckmäßig gehen die Innenfläche der Seitenwand der Bandführung und das Tastelement bündig ineinander über. Bevorzugt wird aus der Einzeldicke der Faserbänder ein Mittelwert gebildet. Vorteilhaft ist die ortsfeste Gegenfläche eine Gleitfläche, an der die Faserbänder entlanggleiten. Zweckmäßig ist die Gleitfläche des Tastelements in Längsrichtung gerade ausgebildet. Bevorzugt ist der Bandführung ein Quetschwalzenpaar vorgeschaltet. Vorteilhaft ist der Bandführung das erste Streckwalzenpaar als Abzugswalzen nachgeschaltet. Zweckmaßig beträgt die Liefergeschwindigkeit ca. 150 m/min Bevorzugt ist die Abzugskraft der Abzugswalzen höher als die Klemmkraft an der Engstelle. Vorteilhaft ist die Klemmkraft kleiner als die Abrißkraft. Zweckmäßig ist mindestens die Deckfläche der Bandführung auf- und zuklappbar. Bevorzugt ist die Deckfläche an einem Drehgelenk befestigt. Vorteilhaft ist das Walzenpaar ein zylinderförmiges Kalanderwalzenpaar. Zweckmäßig ist bei einer Vorrichtung zur Messung der Starke eines Faserverbandes mit einer Bandführung zum Führen der Faserbänder am Streckwerkseinlauf, die eine Deck- und Bodenflache aufweist und deren Seitenwände konisch, die nebeneinander einlaufenden Faserbänder in einer Ebene seitlich nebeneinander zusannmenführend ausgebildet sind und der ein Walzenpaar nachgeordnet ist nach dem die Faserbänder wieder nebeneinander auseinanderlaufen, bei der ein belastetes, ortsbewegliches Tastelement vorhanden ist, das mit einer ortsfesten Gegenfläche eine Engstelle für den durchlaufenden, aus Faserbändern bestehenden Faserverband bildet und dessen Lageänderung bei unterschiedlicher Stärke des Faserverbandes auf eine Wandlereinrichtung zur Erzeugung eines Steuerimpulses einwirkt, das bewegliche Tastelement der Bandführung im Bereich der in der Engstelle nebeneinander zusammengeführten Faserbänder zugeordnet und weist eine Gleitfläche auf, die die Faserbänder nebeneinander verdichtend gegen die ortsfeste Gegenfläche der Bandführung drückt und das Walzenpaar zieht die in der Engstelle zusammengdrückten abgetasteten Faserbänder nebeneinander ab. Bevorzugt sind die Kanten der Bandführung entgratet. Vorteilhaft ist die Bandführung ein Gußteil. Zweckmäßig weisen die mit dem Faserband in Berührung stehenden Kontaktflächen der Bandführung einen niedrigen Reibwert auf. Bevorzugt weist die mit dem Faserband in Berührung stehende Gleitfläche des Tastelementes einen niedrigen Reibwert auf Vorteilhaft ist die Bandführung mindestens im Bereich der Kontaktflächen emailliert. Zweckmäßig ist die Gleitfläche des Tastelementes emailliert. Bevorzugt besteht die Bandführung aus einem Glas. Vorteilhaft besteht die Bandführung aus einer Keramik. Zweckmäßig besteht zumindestens die Gleitfläche des Tastelementes aus einem Glas. Bevorzugt besteht zumindestens die Gleitfläche des Tastelementes aus einer Keramik. Vorteilhaft ist die Keramik eine Sinterkeramik. Zweckmäßig ist die Keramik eine Oxidkeramik. Bevorzugt besteht die Bandführung aus Metall. Vorteilhaft sind die Kontaktflächen poliert. Zweckmäßig sind die Kontaktflächen gehärtet. Bevorzugt bestehen die Kontaktflächen aus Hartstoffeinsätzen. Vorteilhaft weist die Anführung einen im wesentlichen rechteckigen Querschnitt in der Engstelle auf. Zweckmäßig verjüngt sich der Querschnitt in Richtung auf das Tastelement. Bevorzugt ist mindestens eine der den Querschnitt begrenzenden Wände zur Querschnittsverjüngung zu der gegenüberliegenden Wand geneigt. Vorteilhaft weist die Bandführung im wesentlichen die Form eines Pyramidenstumpfes auf. Zweckmäßig durchgreift das Tastelement eine Schmalseite der Bandführung.

Die Erfindung wird nachfolgend anhand von zeichnerisch dargestellten Ausführungsbeispielen näher erlautert.

Es zeigt:
- Fig. 1a: schematisch eine Regulierstrecke beispielsweise die Hochleistungsstrecke HS 900 der Trützschler GmbH & Co. KG in Seitenansicht,
- Fig. 1b: als Draufsicht den Einzugsbereich,
- Fig. 2: als Draufsicht im Schnitt die Bandführung mit vertikal angeordneten Abzugswalzen.
- Fig. 3: die Bandführung im Schnitt mit horizontal angeordneter Abzugswalze,
- Fig. 3a - 3e: Schnitte durch Fig 3 entlang den Linien aa bis ee,
- Fig. 4: als Detail im Teilschnitt den Bereich der Engstelle der Bandführung,
- Fig 5: im Teilschnitt zwei hintereinander geschaltete Bandführungen als Draufsicht,
- Fig. 6a: als Seitenansicht, die Lage der Bandführung zum ersten Walzenpaar,
- Fig. 6b: als Vorderansicht den Querschnitt der Bandführung,
- Fig. 7: in perspektivischer Ansicht die Bandführung,
- Fig. 8a: als Vorderansicht den Querschnitt der Bandführung mit abklappbarem Dekkel,
- Fig 8b: den Deckel der Bandführung in aufgeklapptem Zustand,
- Fig. 9a: zwei zusammengesteckte Bandführungen,
- Fig. 9b: eine einteilige doppelte Bandführung,
- Fig. 10a: eine zusammengesetzte doppelte Bandführung mit Entlüftungsöffnungen,
- Fig. 10b: eine Bandführung mit Entlüftungsöffnung,
- Fig. 11a: die Bandführung in der Draufsicht,
- Fig. 11b: einen Schnitt durch die Bandführung gem. aa,
- Fig.12a: die Anordnung eines zusätzlichen Walzenpaares vor der Bandführung in Seitenansicht,
- Fig. 12b: die entsprechende Ansicht als Draufsicht,
- Fig. 13: zwei hintereinander geschaltete Bandführungen mit zwischengeschaltetem Quetschwalzenpaar,
- Fig. 14a: die Draufsicht auf eine Bandführung mit vertikal angeordnetem Tastelement,
- Fig. 14b: den Schnitt durch die Bandführung gem. Fig. 14a, Schnitt A-A.

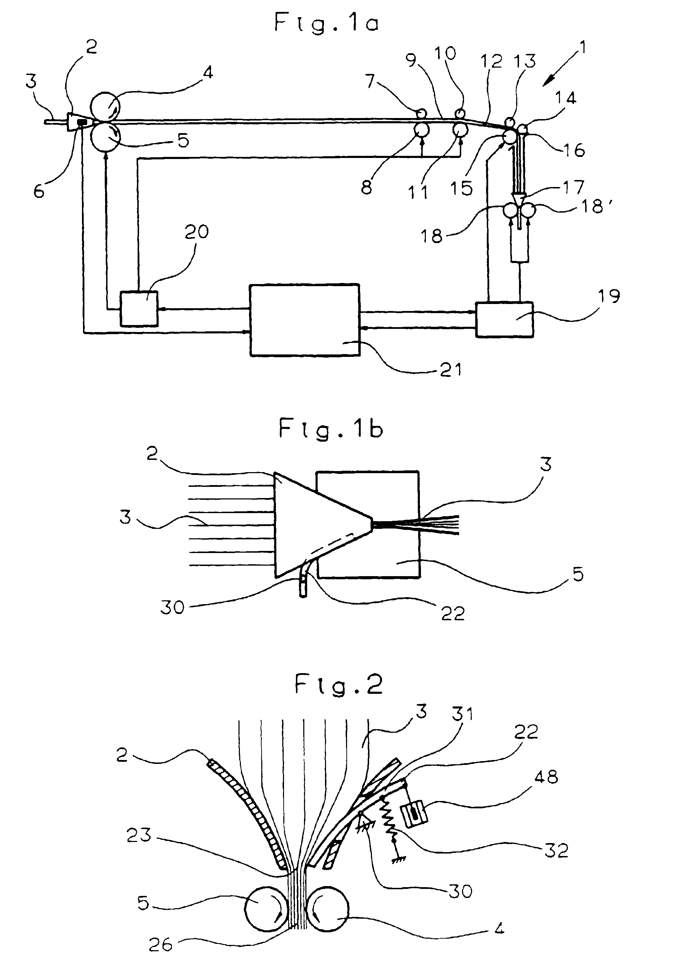

Fig. 1a zeigt eine Hochleistungsstrecke der Firma Trützschler, beispielsweise die Hochleistungsstrecke HS 900 schematisch als Seitenansicht. Die Faserbänder 3 treten, aus nicht dargestellten Kannen kommend, in die Bandführung 2 ein und werden, gezogen durch die Abzugswalzen 4,5 an dem Meßglied 6 vorbeitransportiert. Das Streckwerk 1 besteht im wesentlichen aus der oberen Streckwerkseinlaufwalze 7 und der unteren Streckwerkseinlaufwalze 8, die dem Vorverstreckbereich 9 mit der Vorverstreckoberwalze 10 und der Vorverstreckunterwalze 11 zugeordnet sind. Zwischen der Vorverstreckoberwalze 10 mit der Vorverstreckunterwalze 11 und der Hauptverstreckoberwalze 13 und der Hauptverstreckunterwalze 15 befindet sich der Hauptverstreckbereich 12. Der Hauptverstreckunterwalze 15 ist eine zweite Hauptverstreckoberwalze 14 zugeordnet. Es handelt sich also um ein vier über drei Verstrecksystem.

Die verstreckten Faserbänder 3 erreichen nach Passieren der Hauptverstreckoberwalze 14 die Vliesführung 16 und werden mittels der Lieferwalzen 18, 18' durch den Bandtrichter 17 gezogen, zu einem einzelnen Band zusammengefaßt und in nicht dargestellten Kannen abgelegt. Die Hauptverstreckwalzen 13, 14, 15 und die Lieferwalzen 18, 18' werden durch den Hauptmotor 19 angetrieben, der über den Rechner 21 gesteuert wird. In den Rechner 21 gehen auch die durch das Meßglied 6 an der Bandführung 2 ermittelten Signale ein und werden in Befehle umgesetzt, die den Regelmotor 20 steuern, der die obere Abzugswalze 4, die untere Abzugswalze 5 sowie die Walzen des Vorverstreckbereiches 9, also die Streckwerkeinlaufoberwalze 7, die Streckwerkeinlaufunterwalze 8, die Vorverstreckoberwalze 10 und die Vorverstreckunterwalze 11 antreibt. Entsprechend dem durch das Meßglied 6 ermittelten Werten der einlaufenden Fasermenge aus den Faserbändern 3 werden die dabei auftretenden Schwankungen gesteuert über den Rechner 21 mittels des Regelmotors 20 durch Veränderung der Walzendrehzahlen an den Walzen 4, 5, 7, 8 10, 11 ausgeregelt.

In Fig. 1b, der Draufsicht auf den Einzugsbereich, ist die obere Abzugswalze 4 der Übersichtlichkeit wegen nicht dargestellt. Die Faserbänder 3 werden in der Bandführung 2 zusammengeführt, das Meßglied 6 ist als Tastelement 22 ausgeführt, das in einem Drehlager 30 gelagert ist und zwei Schenkel aufweist. Der eine Schenkel steht mit den Faserbändern 3 in Eingriff, der andere Schenkel, der Hebel 31 wird durch später noch zu erläutemde Kräfte beaufschlagt.

Fig. 2, die Seitenansicht des Einzugsbereiches im Teilschnitt, zeigt wie die einzelnen Faserstränge 3 in der Bandführung 2 nebeneinanderliegend zusammengeführt werden und an der Engstelle 23 der Bandführung 2 mittels des Tastelementes 22 abgetastet werden. Das Tastelement 22 ist in einem Drehlager 30 gelagert, wird am Hebel 31 von einer Zugfeder 32 beaufschlagt und ist außerdem mit einem Meßelement 48 verbunden, das im vorliegendne Fall als Tauchspulinstrument ausgeführt ist. Änderungen der zugeführten Fasermenge der Faserbänder 3 werden dadurch als Volumenänderung erfaßt.

Abweichend von Fig. 1b sind die Abzugswalzen 4 und 5 vertikal angeordnet, d. h., daß die Faserbänder 3 übereinanderliegend in den Klemmpunkt 26 der Walzen 4, 5 einlaufen.

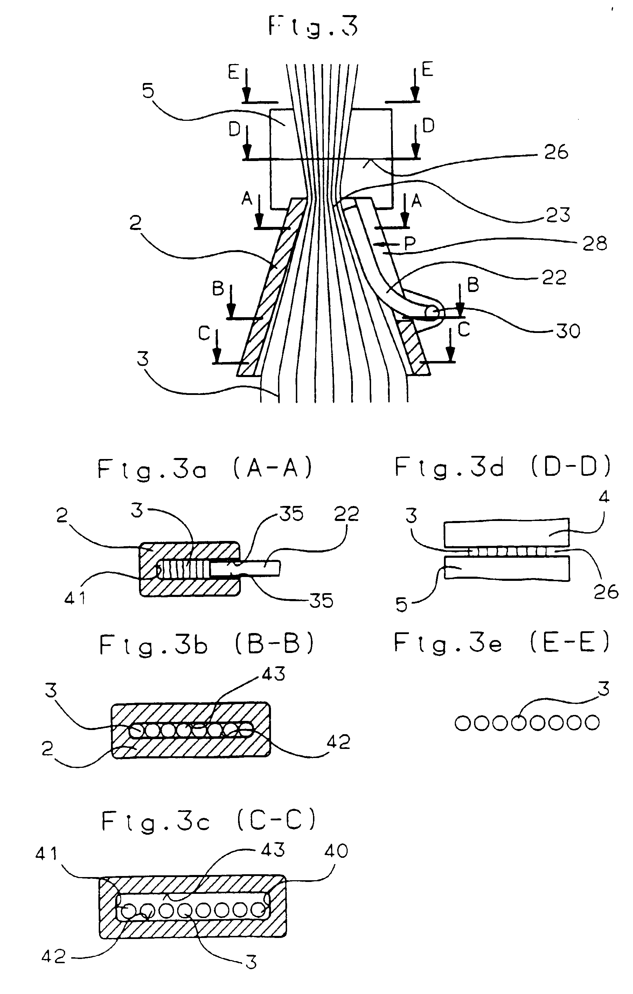

Die Fig. 3 ist wieder als Draufsicht im Schnitt ohne die obere Abzugswalze 4 dargestellt. Beide Walzen 4, 5 sind horizontal angeordnet. Auf das Tastelement 22 wirkt die nicht näher dargestellte Kraft P um die parallelliegenden Faserstränge 3 zur Messung in der Engstelle 23 zu verdichten.

Die durch die Fig. 3 gelegten Schnitte sind in den Fig 3a bis 3e gezeigt. Wie aus Fig. 3c zu entnehmen, laufen acht Faserbänder 3 in die Bandführung 2 ein, die durch die Seitenwände 40, 41, die Decke 43 und den Boden 42 begrenzt wird. Zwischen den Faserbändern 3, den Seitenwänden 40, 41 und der Decke 43 ist noch viel Freiraum, also Luft, die durch das konische Zulaufen der Wände 40, 41, 42, 43, wie Fig. 3b zeigt, erheblich verringert wird.

Fig. 3a zeigt den Schnitt durch die Engstelle 23, also den Bereich, wo Boden 42 und Decke 43 parallel verlaufen und das Tastelement 22 mit seiner Gleitfläche 34 die nebeneinanderliegenden Faserbänder 3 gegen die Gegenfläche 41 preßt. Die Abzugswalzen 4, 5 ziehen die verdichtet Faserbänder 3 durch den Bandführungsausgang 27. Die Pressung zwischen den Walzen 4, 5 erfolgt dabei im Klemmpunkt 26, der als Schnitt dd in Fig. 3d dargestellt ist. In diesem Punkt ist die größte Verdichtung der Faserbänder 3 erreicht. Danach fächern sie wieder in einzelne Faserbänder 3, wie in Fig. 3e dem Schnitt ee dargestellt, auf.

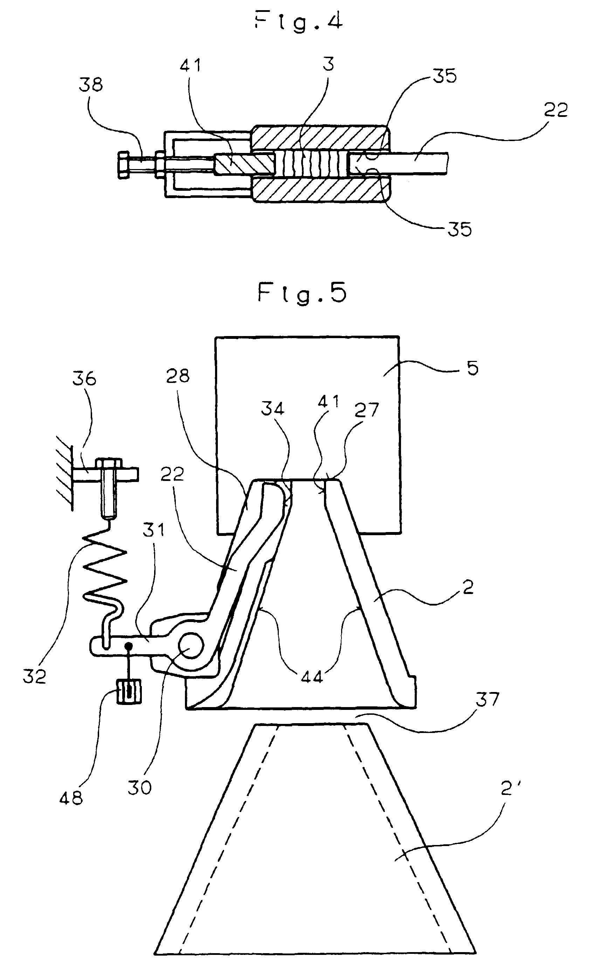

Die Fig. 4 zeigt eine spezielle Ausführungsform und als solche ebenfalls die in Fig. 3a schon dargestellte Engstelle 23. Wie in Fig. 3a sind auch hier Decke 43 und Boden 42 als Parallelflächen 35 ausgeführt. Ebenso ist das Tastelement 22, das die Aussparung 28 in der Schmalseite der Bandführung 2 im vorliegenden Fall, also der Seite 40 durchgreift, in dem Drehlager 30 gelagert. Abweichend von diesen identischen Ausführungsformen zeigt die Fig. 4 jedoch, daß die Gegenfläche 41, also die dem Tastelement 22 gegenüberliegende Wand der Bandführung, im Bereich der Engstelle 23 verstellbar ausgeführt ist. Die Verstellung kann dabei durch die Einstellschraube 38 erfolgen.

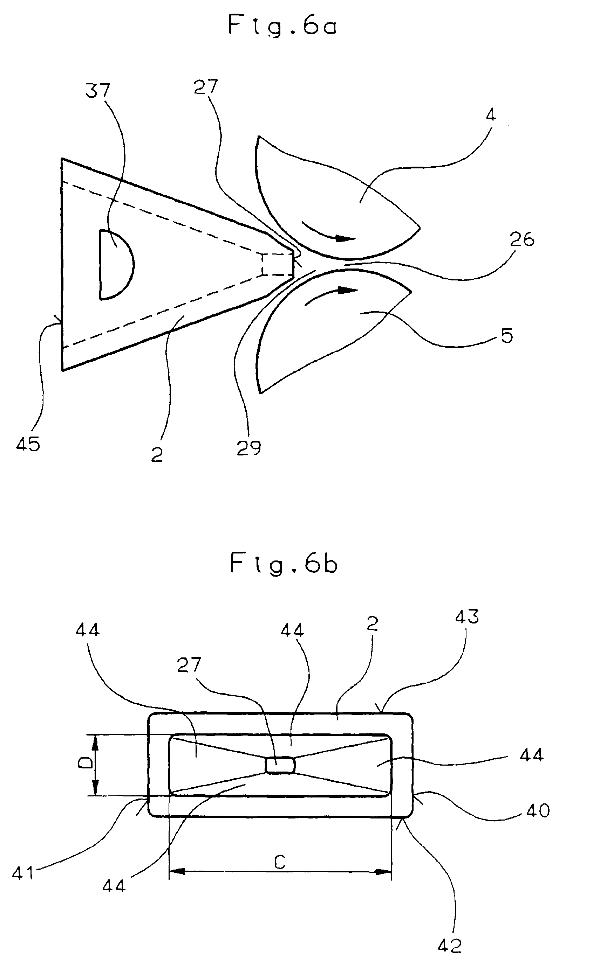

Fig. 5 zeigt die Hintereinanderschaltung von zwei Bandführungen 2, 2'. Die Faserbänder 3 treten dabei zunächst in die vorgeschaltete Bandführung 2' ein und werden hier vorverdichtet. Die Bandführung 2 ist in geringem Abstand von der Bandführung 2' angeordnet, so daß in diesem Abstand Luft austreten kann. Es bildet sich dadurch praktisch eine Entlüftungsöffnung 37. In der Bandführung 2 erfolgt eine weitere Verdichtung der Faserbänder 3, die sich dabei eng an die Innenwandung der Bandführung 2, also an die Kontaktflächen 44 anlegen Zur Reibungsverringerung sind deshalb diese Kontaktflächen 44 poliert, emailliert oder mit glatten Hartstoffeinsätzen versehen, durch die die Reibung verringert wird.

Das Tastelement 22 liegt in einer Aussparung 28 und wird durch das Drehlager 30 in seiner Position gehalten. Es ist mit einem Hebel 31 ausgerüstet, der durch eine in einem Widerlager 36 angeordnete Feder 32 beaufschlagt wird. Des weiteren greift an dem Hebel 31 das Meßelement 48 an, das als Tauchspulinstrument ausgeführt ist.

Fig. 6a zeigt den Einzugsbereich in Seitenansicht Der Bandführungsausgang 27 ist bei dieser Konstruktion weitgehend in den Walzenspalt 29 zwischen der oberen Abzugswalze 4 und der unteren Abzugswalze 5 vorgerückt, um einen möglichst geringen Abstand zwischen Bandführungsausgang 27 und Klemmpunkt 26 zu erreichen. Im vorderen Bereich der Bandführung 2 ist in der Nähe des Bandführungseingangs 45 eine Entlüftungsöffnung 37 angeordnet.

Fig. 6b zeigt die Vorderansicht der Bandführung 2, also den Querschnitt. Wie daraus zu entnehmen, ist die Bandführung als Hohlpyramidenstumpf mit abgerundeten Kanten ausgeführt, wobei die Begrenzungen durch die Gegenwand 41, die Seitenwand 40, den Boden 42 und den Deckel 43 gebildet werden. Diese innenliegenden trapezförmigen Flächen sind die Kontaktflächen 44. Die Bodenfläche 42 und die Deckfläche 43 sind gleich groß und besitzen eine Ausdehnung C, die wesentlich größer als die entsprechende Ausdehnung D der Gegenfläche 41 bzw. Wandfläche 40 ist.

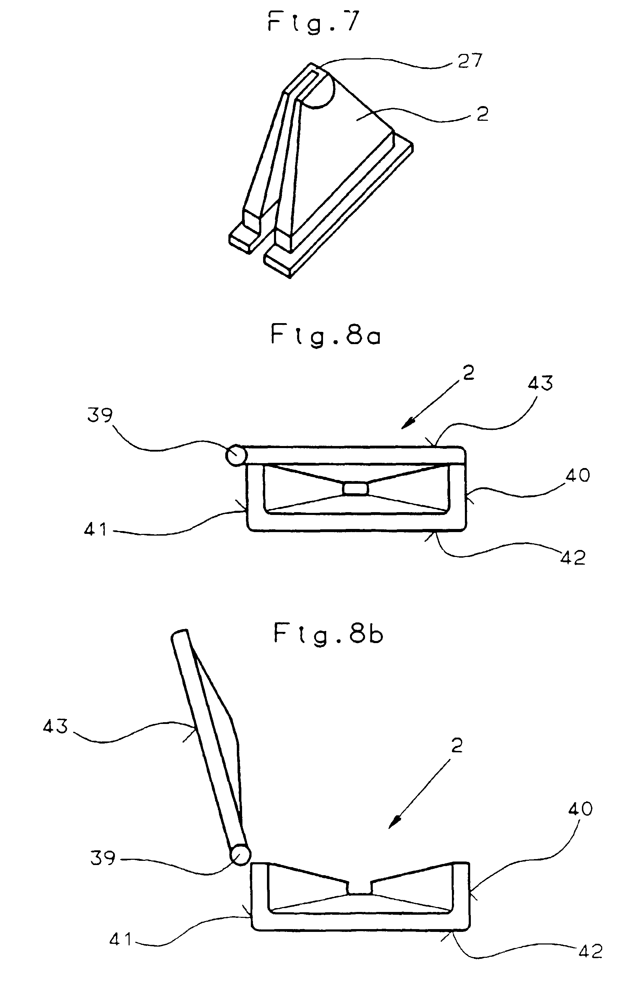

In Fig. 7 ist die Bandführung 2 perspektivisch dargestellt. Der Bereich des Bandführungsausgangs 27 ist, um eine größtmögliche Annäherung an den Klemmpunkt 26 zu erreichen, abgeschrägt.

Fig. 8a entspricht im wesentlichen der Fig. 6b. Die Decke 43 ist bei dieser Konstruktion jedoch abklappbar ausgeführt, d. h. in einem Drehgelenk 39 gelagert, so daß sie, wie in Fig. 8b dargestellt, zur Reingiung der Bandführung 2 aufgeklappt werden kann.

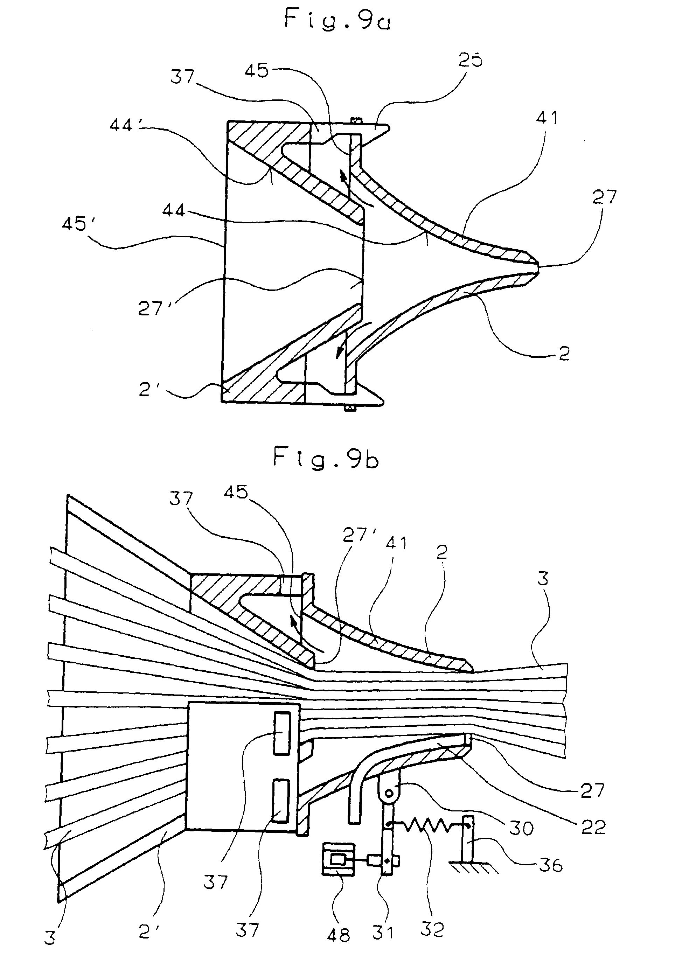

Die Fig. 9a und 9b zeigen zweistufige Formen der Bandführung 2, wobei gemäß Fig. 9a eine Bandführung 2' über Verbinder 25 mit der Bandführung 2 verbunden ist. Es ist dadurch möglich, die Bandführung 2' von der Bandführung 2 zu lösen und sich ggf. im Bereich der Entlüftungsöffnung 37 anlagernde Faserreste - Schnee - oder Verunreinigungen zu entfernen. Auch bei dieser Konstruktion treten die Faserbänder 3 über den Bandführungseingang 45' in die Bandführung 2' ein, verlassen diese durch den Bandführungsausgang 27', passieren den Bandführungseingang 45 und verlassen die Bandführung 2 durch den Bandführungsausgang 27.

Der Aufbau der Konstruktion gem. Fig. 9b ist analog. Jedoch bilden in diesem Falle die Bandführung 2' und die Bandführung 2 ein integrales Teil. Die Luftaustrittsöffnungen 37 sind wie auch bei Fig. 9a seitlich und in der Deckfläche 43 der Faserbandführung 2' angeordnet.

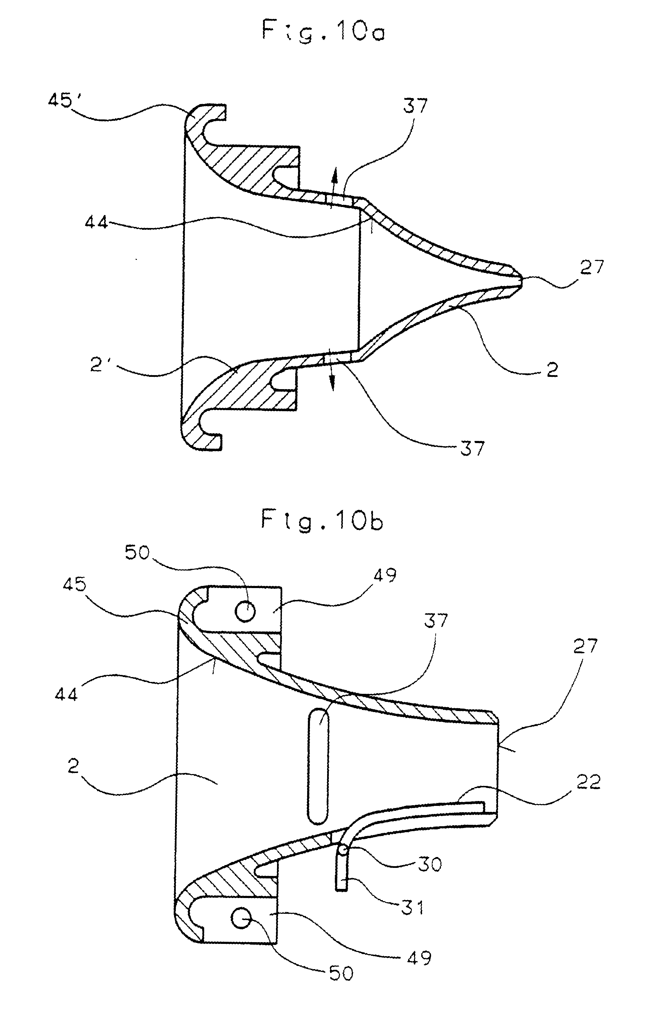

Die Fig. 10a und 10b sind weitere Ausführungsbeispiele. wobei die Konstruktion gem. Fig. 10a wieder zweistufig ausgeführt ist und im Bereich des Bandführungsausgangs 27', also am Ende der Bandführung 2', Entlüftungsöffnungen 37 vorhanden sind.

Gem. Fig. 10b ist die Bandführung 2 als solche länger ausgestaltet, wobei die Seitenwände geringer gegeneinander geneigt sind. Hierbei sind Entlüftungsöffnungen 37 sowohl in der Boden- 42 wie auch in der Deckfläche 43 angeordnet. Im Einlaufbereich ist die Bandführung 2 mit Flanschen 49 versehen, die Bohrungen 50 zur Befestigung am Maschinengestell aufweisen.

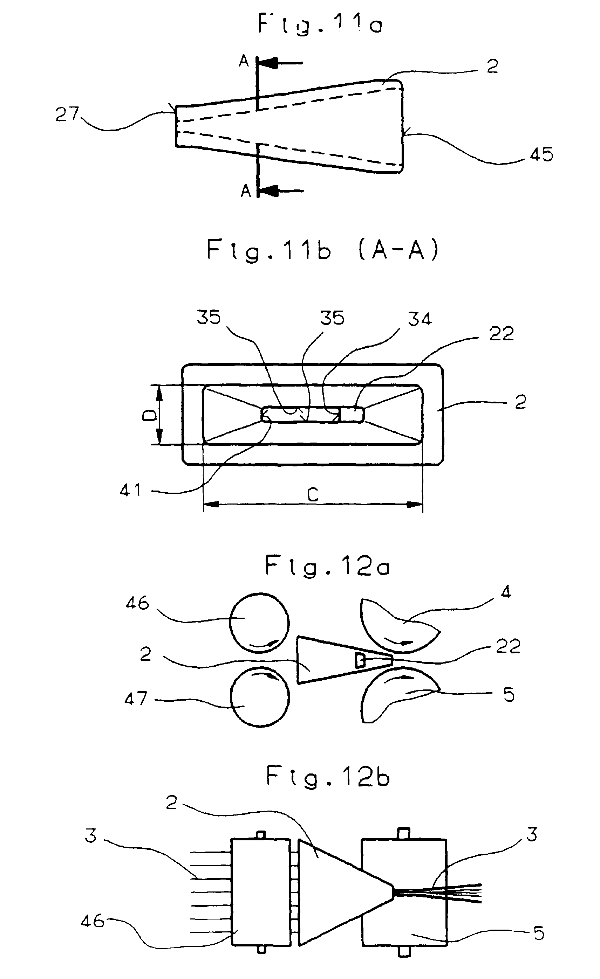

Die Fig. 11a und 11b unterscheiden sich von den Fig. 9 und 10 dadurch, daß die Seitenwände nicht gewölbt, sondern gerade ausgeführt sind.

Fig. 11b ist der Schnitt durch Fig. 11a gem. der Linie aa. Auch hier weist die Engstelle 23, in der die Messung stattfindet, parallele Wände 35 auf. Das Tastelement 22 drückt mit seiner Gleitfläche 34 auf die nicht dargestellten Faserstränge 3, so daß diese gegen die Gegenfläche 41 gepreßt werden.

Gem. Fig. 12a und 12b ist der Bandführung 2 ein Quetschwalzenpaar 46, 47 vorgeschaltet, das die Aufgabe hat, die Faserbänder 3 aus den angelieferten Trommeln abzuziehen und dadurch die Abzugswalzen 4, 5 zu entlasten. Zwischen den beiden Walzenpaaren findet damit praktisch kein Verzug mehr statt. Die Abzugswalzen 4, 5 müssen lediglich den durch die Verdichtung der Faserbänder 3 aufgebrachten Reibwiderstand zwischen Faserbänder3 und Bandführung 2 mit dem darin angeordneten Tastelement 22 überwinden, die auf die Faserbänder 3 ausgeübte Kraft kann dadurch geringer sein, so daß ein Abreißen eines oder mehrerer Faserbänder 3 vermieden wird.

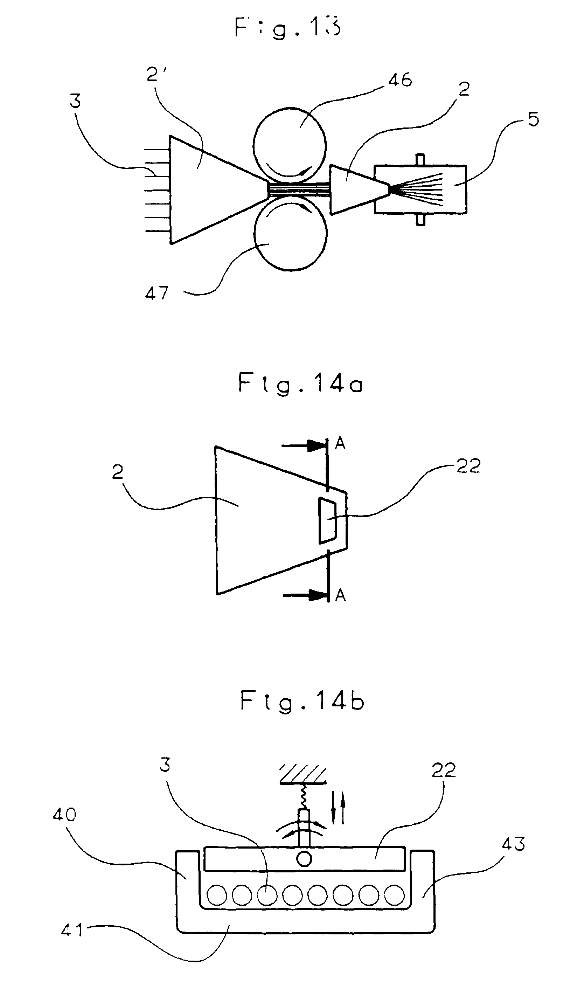

Fig. 13 zeigt eine ähnliche Ausgestaltungsvariante wie Fig. 12, jedoch sind in diesem Falle zwei Bandführungen 2, 2' vorhanden, zwischen die das Quetschwalzenpaar 46, 47 eingefügt ist. Zusätzlich geändert ist die Stellung der Abzugswalzen 4, 5, die in diesem Fall vertikal angeordnet sind.

Die Fig. 14a, 14b zeigen eine alternative Anordnung des Tastelementes 22. Bei den bisher beschriebenen Konstruktionen durchgriff das Tastelement 22 eine Schmalseite der Bandführung 2 und verdichtete so die Faserbänder 3, daß die Ausdehnung im Querbereich, also dem Bereich C gem. Fig. 11b verringert wurde.

Gem der vorliegenden Alternative wird jetzt das Maß D verringert, d. h. die Faserbänder 3 werden über die Breite, im vorliegenden Fall also von oben verdichtet. Dabei ist das Tastelement so ausgeführt, daß es außer der Abtastbewegung, also der Verdichtungsbewegung in Richtung der Faserbänder 3, auch noch eine Schwenkbewegung ausführen kann und so berücksichtigt, daß ggf. unterschiedlich starke Faserbänder 3 nebeneinander angeordnet sind.

### Begriffsliste:

- 1: Streckwerk
- 2: Bandführung
- 3: Faserband
- 4: obere Abzugswalze
- 5: untere Abzugswalze
- 6: Meßglied
- 7: Streckwerkeinlauf, Oberwalze
- 8: Streckwerkeinlauf, Unterwalze
- 9: Vorverstreckbereich
- 10: Vorverstreckoberwalze
- 11: Vorverstreckunterwalze
- 12: Hauptverstreckbereich
- 13: erste Hauptverstreckoberwalze
- 14: zweite Hauptverstreckoberwalze
- 15: Hauptverstreckunterwalze
- 16: Vliesführung
- 17: Bandtrichter
- 18: Lieferwalze
- 18': Lieferwalze
- 19: Hauptmotor
- 20: Regelmotor
- 21: Rechner
- 22: Tastelement
- 23: Engstelle
- 24: Wandler
- 25: Verbinder
- 26: Klemmpunkt
- 27: Bandführungsausgang (von 2)
- 27': Bandführungsausgang (von 2')
- 28: Aussparung
- 29: Walzenspalt
- 30: Drehlager
- 31: Hebel
- 32: Feder
- 33: Anschlag
- 34: Gleitfläche
- 35: Parallelfläche
- 36: Widerlager
- 37: Entlüftungsöffnung
- 38: Einstellschraube
- 39: Drehgelenk
- 40: Seitenwand
- 41: Gegenfläche
- 42: Boden
- 43: Decke
- 44: Kontaktfläche
- 45: Bandführungseingang
- 46: obere Quetschwalze
- 47: untere Quetschwalze
- 48: Meßelement
- 49: Flansch
- 50: Bohrung

## Patentansprüche

1. Vorrichtung zur Messung der Stärke eines Faserverbandes mit einer Bandführung (2) zum Führen der Faserbänder (3) am Streckwerkseinlauf, deren Wände mindestens teilweise konisch, die einlaufenden Faserbänder (3) in einer Ebene zusammenführend ausgebildet sind und der ein Walzenpaar (4,5) nachgeordnet ist, nach dem die Faserbänder (3) wieder auseinanderlaufen, bei der ein belastetes, ortsbewegliches Tastelement (22) vorhanden ist, das mit einer ortsfesten Gegenfläche eine Engstelle für den durchlaufenden, aus Faserbändem bestehenden Faserverband bildet und dessen Lageänderung bei unterschiedlicher Stärke des Faserverbandes auf eine Wandlereinrichtung zur Erzeugung eines Steuerimpulseseinwirkt, dadurch gekennzeichnet, daß das Tastelement (22) der Bandführung (2) zugeordnet ist, der aus Faserbändern (3) bestehende Faserverband durch das Tastelement (22) in der Bandführung (2) in einer Ebene verdichtbar und abtastbar ist und der aus Faserbändern (3) bestehende abgetastete Faserverband durch das Walzenpaar (4, 5) abziehbar ist.

2. Vorrichtung nach Anspruch 1, dadurch gekennzeichnet, daß das bewegliche Tastelement (22) der Bandführung (2) im Bereich der in der Engstelle (23) nebeneinander zusammengeführten Faserbänder (3) zugeordnet ist und eine Gleitfläche (34) aufweist, die die Faserbänder (3) nebeneinander verdichtend gegen die ortsfeste Gegenfläche (41) der Bandführung (2) drückt und das Walzenpaar (4, 5) die in der Engstelle (23) zusammengedrückten abgetasteten Faserbänder (3) nebeneinander abzieht.

3. Vorrichtung nach Anspruch 1 oder, 2 dadurch gekennzeichnet, daß der Abstand (a) zwischen dem beweglichen Tastelement (22) und dem Klemmpunkt (26) des Walzenpaares (4, 5) gleich oder kleiner als die Stapellänge des Fasermaterials ist.

4. Vorrichtung nach einem der Ansprüche 1 bis 3, dadurch gekennzeichnet, daß der Abstand (b) zwischen dem Ausgang (27) der Bandführung (2) und dem Klemmpunkt (26) des Walzenpaares (4, 5) gleich oder kleiner als die Stapellänge des Fasermaterials ist.

5. Vorrichtung nach einem der Ansprüche 1 bis 4, dadurch gekennzeichnet, daß das Tastelement (22) horizontal und rechtwinklig in bezug auf die Bandlaufrichtung beweglich ist.

6. Vorrichtung nach einem der Ansprüche 1 bis 5, dadurch gekennzeichnet, daß das Tastelement (22) vertikal und rechtwinklig in bezug auf die Bandlaufrichtung beweglich ist

7. Vorrichtung nach einem der Ansprüche 1 bis 6, dadurch gekennzeichnet, daß die Bandführung (2) mindestens eine Öffnung (28) aufweist, wobei das Tastelement (22) durch die Öffnung (28) durchgreift.

8. Vorrichtung nach einem der Ansprüche 1 bis 7, dadurch gekennzeichnet, daß der Ausgang (27) der Bandführung (2) unmittelbar vor dem Walzenspalt (29) der Abzugswalzen (4, 5) liegt.

9. Vorrichtung nach einem der Ansprüche 1 bis 8, das durch gekennzeichnet, daß die Engstelle (23) unmittelbar vor dem Ausgang (27) der Bandführung (2) angeordnet ist.

10. Vorrichtung nach einem der Ansprüche 1 bis 9, dadurch gekennzeichnet, daß die Abzugskraft höher ist als die Meßkraft.

11. Vorrichtung nach einem der Ansprüche 1 bis 10, dadurch gekennzeichnet, daß die Öffnung (28) eine Aussparung (28') ist.

12. Vorrichtung nach einem der Ansprüche 1 bis 7, dadurch gekennzeichnet, daß die Aussparung (28') etwa rechteckig ist.

13. Vorrichtung nach einem der Ansprüche 1 bis 12, dadurch gekennzeichnet, daß das Tastelement (22) ein etwa rechteckiges Fühlelement ist, dessen lange Kanten in Breitenrichtung und dessen kurzen Kanten in Arbeitsrichtung verlaufen.

14. Vorrichtung nach einem der Ansprüche 1 bis 13, dadurch gekennzeichnet, daß das äußere Ende des Tastelements (22) in geringem Abstand zum Ausgang (27) der Bandführung (2) in Richtung auf die Abzugswalzen (4, 5) angeordnet ist.

15. Vorrichtung nach einem der Ansprüche 1 bis 14, dadurch gekennzeichnet, daß das Tastelement (22) an einem ortsfesten Drehlager (30) gelagert ist.

16. Vorrichtung nach einem der Ansprüche 1 bis 15, dadurch gekennzeichnet, daß ein Hebel (31) des Drehlagers (30) mit einem Kraftelement, z. B. Gegenggewicht, Feder o. dgl., zusammenwirkt.

17. Vorrichtung nach einem der Ansprüche 1 bis 16, dadurch gekennzeichnet, daß das Tastelement (22) in horizontaler Richtung beweglich gelagert ist.

18. Vorrichtung nach einem der Ansprüche 1 bis 17, dadurch gekennzeichnet, daß das Tastelement (22) an seinem einen Ende federnd gelagert ist.

19. Vorrichtung nach einem der Ansprüche 1 bis 18, dadurch gekennzeichnet, daß das Tastelement (22) an einem Halteglied, z B Hebel, gelagert ist.

20. Vorrichtung nach einem der Ansprüche 1 bis 19, dadurch gekennzeichnet, daß das Tastelement (22) um eine vertikale Achse drehbar gelagert ist.

21. Vorrichtung nach einem der Ansprüche 1 bis 20, dadurch gekennzeichnet, daß das Tastelement (22) mindestens ein induktives Meßelement (48) mit Tauchkern und Tauchspule aufweist.

22. Vorrichtung nach einem der Ansprüche 1 bis 21, dadurch gekennzeichnet, das Meßelement ein analog arbeitender berührungsloser Abstandssensor, z. B. ein induktiver Näherungsinitiator ist.

23. Vorrichtung nach einem der Ansprüche 1 bis 22, dadurch gekennzeichnet, daß dem Tastelement (22) ein Anschlag (33) zugeordnet ist.

24. Vorrichtung nach einem der Ansprüche 1 bis 23, dadurch gekennzeichnet, daß das Tastelement (22) durch mindestens eine Kraft belastet und abgestützt ist.

25. Vorrichtung nach einem der Ansprüche 1 bis 24, dadurch gekennzeichnet, daß die Engstelle (23) nach Art einer fotoblende, also als Blendenverschluß mit inneren Gleitflächen ausgebildet ist.

26. Vorrichtung nach einem der Ansprüche 1 bis 25, dadurch gekennzeichnet, daß das beweglich gelagerte Tastelement (22) einen entsprechenden Durchbruch der Wandung der Bandführung (2) durchsetzt und mit einer Gleitfläche (34) den jeweiligen Faserverband bis nahe an den Substanzquerschnitt belastet.

27. Vorrichtung nach einem der Ansprüche 1 bis 26, dadurch gekennzeichnet, daß die Engstelle (23) zwei zueinander parallele Flächen (35) aufweist, zwischen die ein Teil des beweglich gelagerten Tastelements (22) eingepaßt ist.

28. Vorrichtung nach einem der Ansprüche 1 bis 27, dadurch gekennzeichnet, daß die dem beweglich gelagerten Tastelement (22) gegenüberliegende Wandung (41) rechtwinklig zu den parallelen Flächen (35) verläuft.

29. Vorrichtung nach einem der Ansprüche 1 bis 28, dadurch gekennzeichnet, daß die Vorspannung des beweglich gelagerten Tastelements (22) durch mechanische, elektrische, hydraulische oder pneumatische Mittel, z. B. Federn, Gewichte, Eigenfederung, Belastungszylinder, Magneten o dgl erfolgt und einstellbar sein kann.

30. Vorrichtung nach einem der Ansprüche 1 bis 29, dadurch gekennzeichnet, daß das beweglich gelagerte Tastelement (22) als Winkelhebel ausgebildet ist, der etwa im Knickpunkt in der Aussparung (28) der Bandführung (2) gelagert ist, wobei entweder der Winkelhebel oder die Bandführung (2) ortsfest gelagert ist und der Winkelhebel federbelastet ist.

31. Vorrichtung nach einem der Ansprüche 1 bis 30, dadurch gekennzeichnet, daß die den Winkelhebel (31) belastende Feder 32 mit ihrem freien Ende an einem fein einstellbaren Widerlager (36) anliegt.

32. Vorrichtung nach einem der Ansprüche 1 bis 31, dadurch gekennzeichnet, daß die Achsen der Abzugswalzen (4,5) horizontal angeordnet sind.

33. Vorrichtung nach einem der Ansprüche 1 bis 32, dadurch gekennzeichnet, daß die Achsen der Abzugswalzen (4,5) vertikal angeordnet sind.

34. Vorrichtung nach einem der Ansprüche 1 bis 33, dadurch gekennzeichnet, daß der Bandführung (2) eine weitere Bandführung (2') vorgeschaltet ist, wobei der Bereich zwischen den beiden Bandführungen (2, 2') mit der Außenluft über mindestens eine Offnung (37) in Verbindung steht.

35. Vorrichtung nach einem der Ansprüche 1 bis 34, dadurch gekennzeichnet, daß die Bandführung (2) mindestens eine Entlüftungsöffnung (37) aufweist.

36. Vorrichtung nach einem der Ansprüche 1 bis 35, dadurch gekennzeichnet, der Eingang (45) der Bandführung (2) einen Rechteckquerschnitt aufweist.

37. Vorrichtung nach einem der Ansprüche 1 bis 36, dadurch gekennzeichnet, daß der Ausgang (27) der Bandführung (2) einen Rechteckquerschnitt aufweist.

38. Vorrichtung nach einem der Ansprüche 1 bis 37, dadurch gekennzeichnet, daß der Ausgang (27) der Bandführung (2) bis in den Walzenspalt (29) zwischen den Abzugswalzen (4,5) reicht.

39. Vorrichtung nach einem der Ansprüche 1 bis 38, dadurch gekennzeichnet, daß die Seitenwände (40, 41, 42, 43) der Bandührung (2) in Bandlaufrichtung konisch zusammenlaufend ausgebildet sind.

40. Vorrichtung nach einem der Ansprüche 1 bis 39, dadurch gekennzeichnet, daß die Bodenwand (42) und die Deckwand (43) der Bandführung (2) in Bandlaufrichtung konisch zusammenlaufend ausgebildet sind.

41. Vorrichtung nach einem der Ansprüche 1 bis 40, dadurch gekennzeichnet, daß das dem Tastelement (22) gegenüberliegende ortsfeste Wandelement (41) lageveränderbar ist, z. B. durch eine Einstellschraube (38).

42. Vorrichtung nach einem der Ansprüche 1 bis 41, dadurch gekennzeichnet, daß das Tastelement (22) trapezförmig ausgebildet ist.

43. Vorrichtung nach einem der Ansprüche 1 bis 42, dadurch gekennzeichnet, daß die Gleitfläche (34) des Tastelements (22) konvex gebogen bzw. gerundet ist.

44. Vorrichtung nach einem der Ansprüche 1 bis 43, dadurch gekennzeichnet, daß die Innenfläche der Seitenwand der Bandführung (2) und das Tastelement (22) bündig ineinander übergehen.

45. Vorrichtung nach einem der Ansprüche 1 bis 44, dadurch gekennzeichnet, daß aus der Einzeldicke der Faserbänder (3) ein Mittelwert gebildet wird.

46. Vorrichtung nach einem der Ansprüche 1 bis 45, dadurch gekennzeichnet, daß die ortsfeste Gegenfläche (41) eine Gleitfläche ist, an der die Faserbänder (3) entlanggleiten.

47. Vorrichtung nach einem der Ansprüche 1 bis 46, dadurch gekennzeichnet, daß die Gleitfläche (34) des Tastelements (22) in Längsrichtung gerade ausgebildet ist.

48. Vorrichtung nach einem der Ansprüche 1 bis 47, dadurch gekennzeichnet, daß der Bandführung (2) ein Quetschwalzenpaar (46, 47) vorgeschaltet ist.

49. Vorrichtung nach einem der Ansprüche 1 bis 48, dadurch gekennzeichnet, daß der Bandführung (2) das erste Streckwalzenpaar (10, 11) als Abzugswalzen nachgeschaltet ist.

50. Vorrichtung nach einem der Ansprüche 1 bis 49, dadurch gekennzeichnet, daß die Liefergeschwindigkeit ca. 150 m/min beträgt.

51. Vorrichtung nach einem der Ansprüche 1 bis 50, dadurch gekennzeichnet, daß die Abzugskraft höher als die Klemmkraft an der Engstelle (23) ist.

52. Vorrichtung nach einem der Ansprüche 1 bis 51, dadurch gekennzeichnet, daß die Klemmkraft kleiner als die Abrißkraft ist.

53. Vorrichtung nach einem der Ansprüche 1 bis 52, dadurch gekennzeichnet, daß mindestens die Deckfläche (43) der Bandführung (2) auf- und zuklappbar ist.

54. Vorrichtung nach einem der Ansprüche 1 bis 53, dadurch gekennzeichnet, daß die Deckfläche (43) an einem Drehgelenk (39) befestigt ist.

55. Vorrichtung nach einem der Ansprüche 1 bis 54, dadurch gekennzeichnet, daß das Walzenpaar (4, 5) ein zylinderförmiges Kalanderwalzenpaar ist.

56. Vorrichtung nach einem der Ansprüche 1 bis 55 zur Messung der Stärke eines Faserverbandes mit einer Bandführung zum Führen der Faserbänder am Streckwerkseinlauf, die eine Deck- und Bodenfläche aufweist und deren Seitenwände konisch, die nebeneinander einlaufenden Faserbänder in einer Ebene seitlich nebeneinander zusammenführend ausgebildet sind und der ein Walzenpaar nachgeordnet ist, nach dem die Faserbänder wieder nebeneinander auseinanderlaufen, bei der ein belastetes, ortsbewegliches Tastelement vorhanden ist, das mit einer ortsfesten Gegenfläche eine Engstelle für den durchlaufenden, aus Faserbändern bestehenden Faserverband bildet und dessen Lageänderung bei unterschiedlicher Stärke des Faserverbandes auf eine Wandlereinrichtung zur Erzeugung eines Steuerimpulses einwirkt, dadurch gekennzeichnet, daß das bewegliche Tastelement (22) der Bandführung (2) im Bereich der in der Engstelle (23) nebeneinander zusammengeführten Faserbänder (3) zugeordnet ist und eine Gleitfläche (34) aufweist, die die Faserbänder (3) nebeneinander verdichtend gegen die ortsfeste Gegenfläche (41) der Bandführung (2) drückt und das Walzenpaar (4, 5) die in der Engstelle (2, 3) zusammengedrückten abgetasteten Faserbänder (3) nebeneinander abzieht.

57. Vorrichtung nach einem der Ansprüche 1 bis 56, dadurch gekennzeichnet, daß die Kanten der Bandführung (2) entgratet sind.

58. Vorrichtung nach einem der Ansprüche 1 bis 57, dadurch gekennzeichnet, daß die Bandführung (2) ein Gußteil ist.

59. Vorrichtung nach einem der Ansprüche 1 bis 58, dadurch gekennzeichnet, daß die mit dem Faserband (3) in Berührung stehenden Kontaktflächen (44) der Bandführung (2) einen niedrigen Reibwert aufweisen.

60. Vorrichtung nach einem der Ansprüche 1 bis 59, dadurch gekennzeichnet, daß die mit dem Faserband (3) in Berührung stehende Gleitfläche (34) des Tastelementes (6) einen niedrigen Reibwert aufweist.

61. Vorrichtung nach einem der Ansprüche 1 bis 60, dadurch gekennzeichnet, daß die Bandführung (2) mindestens im Bereich der Kontaktflächen (44) emailliert ist.

62. Vorrichtung nach einem der Ansprüche 1 bis 61, dadurch gekennzeichnet, daß die Gleitfläche (34) des Tastelementes (6) emailliert ist.

63. Vorrichtung nach einem der Ansprüche 1 bis 62, dadurch gekennzeichnet, daß die Bandführung (2) aus einem Glas besteht.

64. Vorrichtung nach einem der Ansprüche 1 bis 61, dadurch gekennzeichnet, daß die Bandführung (2) aus einer Keramik besteht.

65. Vorrichtung nach einem der Ansprüche 1 bis 64, dadurch gekennzeichnet, daß zumindest die Gleitfläche (34) des Tastelementes (6) aus einem Glas besteht.

66. Vorrichtung nach einem der Ansprüche 1 bis 65, dadurch gekennzeichnet, daß zumindest die Gleitfläche (34) des Tastelementes (6) aus einer Keramik besteht.

67. Vorrichtung nach einem der Ansprüche 1 bis 66, dadurch gekennzeichnet, daß die Keramik eine Sinterkeramik ist.

68. Vorrichtung nach einem der Ansprüche 1 bis 67, dadurch gekennzeichnet, daß die Keramik eine Oxidkeramik ist.

69. Vorrichtung nach einem der Ansprüche 1 bis 62, dadurch gekennzeichnet, daß die Bandführung (2) aus einem Metall- oder einer Metallegierung besteht.

70. Vorrichtung nach einem der Ansprüche 1 bis 69, dadurch gekennzeichnet, daß die Kontaktflächen (44) poliert sind.

71. Vorrichtung nach einem der Ansprüche 1 bis 70, dadurch gekennzeichnet, daß die Kontaktflächen (44) gehärtet sind.

72. Vorrichtung nach einem der Ansprüche 1 bis 71, dadurch gekennzeichnet, daß die Kontaktflachen (44) aus Hartstoffeinsatzen bestehen.

73. Vorrichtung nach einem der Ansprüche 1 bis 72, dadurch gekennzeichnet, daß die Bandführung (2) in der Engstelle (23) einen im wesentlichen rechteckigen Querschnitt aufweist.

74. Vorrichtung nach einem der Ansprüche 1 bis 73, dadurch gekennzeichnet, daß der Querschnitt sich in Richtung auf das Tastelement (6) verjüngt.

75. Vorrichtung nach einem der Ansprüche 1 bis 74, dadurch gekennzeichnet, daß mindestens eine der den Querschnitt begrenzenden Wände (40, 41, 42, 43) zur Querschnittsverjüngung zu der gegenüberliegenden Wand geneigt ist.

76. Vorrichtung nach einem der Ansprüche 1 bis 75, dadurch gekennzeichnet, daß die Bandführung (2) im wesentlichen die Form eines Pyramidenstumpfes aufweist.

77. Vorrichtung nach einem der Ansprüche 1 bis 76, dadurch gekennzeichnet, daß das Tastelement (6) eine Schmalseite (40, 41) der Bandführung (2) durchgreift.

## Claims

1. Apparatus for measuring the thickness of a fibre formation having a sliver guide (2) for guiding fibre slivers (3) at the inlet of a drawing system, at least some of the walls of which guide taper, funnelling the incoming fibre slivers (3) in one plane, the guide being followed by a pair of rollers (4,5), after which the fibre slivers (3) diverge from one another again, in which apparatus a biased feeler element (22), the position of which is movable, is present which, together with a fixed-position counter-face, forms a narrow zone for the through-running fibre formation consisting of fibre slivers, and a change in the position of which feeler element, when the thickness of the fibre formation is different, acts on a transducer in order to produce a control pulse, characterised in that the feeler element (22) is associated with the sliver guide (2), the fibre formation, consisting of fibre slivers (3), can be compressed in one plane and sensed in the sliver guide (2) by the feeler element (22), and the sensed fibre formation, consisting of fibre slivers (3), can be drawn off by the pair of rollers (4,5).

2. Apparatus according to claim 1, characterised in that the movable feeler element (22) is arranged in the sliver guide (2) in the region where the fibre slivers (3) are funnelled one next to another in the narrow zone (23) and has a glide face (34) which presses the fibre slivers (3) compactly one next to another against the fixed-position counter-face (41) of the sliver guide (2), and the pair of rollers (4, 5) draws off adjacent to one another the fibre slivers (3) pressed together and sensed in the narrow zone (23).

3. Apparatus according to claim 1 or 2, characterised in that the distance (a) between the movable feeler element (22) and the clamping point (26) of the pair of rollers (4, 5) is identical to or smaller than the staple length of the fibre material.

4. Apparatus according to any one of claims 1 to 3, characterised in that the distance (b) between the outlet (27) of the sliver guide (2) and the clamping point (26) of the pair of rollers (4,5) is identical to or smaller than the staple length of the fibre material.

5. Apparatus according to any one of claims 1 to 4, characterised in that the feeler element (22) is movable horizontally and at right angles to the direction of travel of the slivers.

6. Apparatus according to any one of claims 1 to 5, characterised in that the feeler element (22) is movable vertically and at right angles to the direction of travel of the slivers.

7. Apparatus according to any one of claims 1 to 6, characterised in that the sliver guide (2) has at least one opening (28), the feeler element (22) engaging through the opening (28).

8. Apparatus according to any one of claims 1 to 7, characterised in that the outlet (27) of the sliver guide (2) is directly before the roller nip (29) of the draw-off rollers (4,5).

9. Apparatus according to any one of claims 1 to 8, characterised in that the narrow zone (23) is arranged directly before the outlet (27) of the sliver guide (2).

10. Apparatus according to any one of claims 1 to 9, characterised in that the draw-off force is higher than the measuring force.

11. Apparatus according to any one of claims 1 to 10, characterised in that the opening (28) is a recess (28').

12. Apparatus according to any one of claims 1 to 7, characterised in that the recess (28') is roughly rectangular.

13. Apparatus according to any one of claims 1 to 12, characterised in that the feeler element (22) is a roughly rectangular feeler element, the long edges of which extend widthwise and the short edges of which extend in the direction of operation.

14. Apparatus according to any one of claims 1 to 13, characterised in that the outer end of the feeler element (22) is arranged at a small distance from the outlet (27) of the sliver guide (2) in the direction of the draw-off rollers (4,5).

15. Apparatus according to any one of claims 1 to 14, characterised in that the feeler element (22) is mounted at a fixed-position pivot bearing (30).

16. Apparatus according to any one of claims 1 to 15, characterised in that one lever (31) of the pivot bearing (30) cooperates with a biasing element, e.g. a counterweight, spring or the like.

17. Apparatus according to any one of claims 1 to 16, characterised in that the feeler element (22) is mounted so as to be movable in the horizontal direction.

18. Apparatus according to any one of claims 1 to 17, characterised in that the feeler element (22) is spring-mounted at one end.

19. Apparatus according to any one of claims 1 to 18, characterised in that the feeler element (22) is mounted at a holding member, e.g. a lever.

20. Apparatus according to any one of claims 1 to 19, characterised in that the feeler element (22) is rotatably mounted about a vertical axis.

21. Apparatus according to any one of claims 1 to 20, characterised in that the feeler element (22) has at least one inductive measuring element (48) with moving core and moving coil.

22. Apparatus according to any one of claims 1 to 21, characterised in that the measuring element is an analogously operating no-contact distance sensor, e.g. an inductive proximity sensor.

23. Apparatus according to any one of claims 1 to 22, characterised in that a stop (33) is associated with the feeler element (22).

24. Apparatus according to any one of claims 1 to 23, characterised in that the feeler element (22) is biased by at least one force and supported.

25. Apparatus according to any one of claims 1 to 24, characterised in that the narrow zone (23) is designed in the manner of a photographic shutter, that is a diaphragm shutter having inner glide faces.

26. Apparatus according to any one of claims 1 to 25, characterised in that the movably mounted feeler element (22) engages through a corresponding opening in the wall of the sliver guide (2) and, with a glide face (34), presses the fibre formation almost to the cross-section of the material.

27. Apparatus according to any one of claims 1 to 26, characterised in that the narrow zone (23) has two faces (35), parallel to one another, between which a portion of the movably mounted feeler element (22) is fitted.

28. Apparatus according to any one of claims 1 to 27, characterised in that the wall (41) lying opposite to the movably mounted feeler element (22) extends at right angles to the parallel faces (35).

29. Apparatus according to any one of claims 1 to 28, characterised in that the initial biasing of the movably mounted feeler element (22) is effected by mechanical, electrical, hydraulic or pneumatic means, e.g. springs, weights, inherent resilience, biasing cylinders, magnets or the like, and may be adjustable.

30. Apparatus according to any one of claims 1 to 29, characterised in that the movably mounted feeler element (22) is in the form of an angle lever which is mounted roughly at its bending point in the recess (28) in the sliver guide (2), with either the angle lever or the sliver guide (2) being mounted in fixed position and the angle lever being spring-biased.

31. Apparatus according to any one of claims 1 to 30, characterised in that the free end of the spring (32) that biases the angle lever (31) bears against a finely adjustable abutment (36).

32. Apparatus according to any one of claims 1 to 31, characterised in that the axes of the draw-off rollers (4,5) are arranged horizontally.

33. Apparatus according to any one of claims 1 to 32, characterised in that the axes of the draw-off rollers (4,5) are arranged vertically.

34. Apparatus according to any one of claims 1 to 33, characterised in that there is arranged upstream of the sliver guide (2) a further sliver guide (2'), the area between the two sliver guides (2, 2') communicating with the outside air by way of at least one opening (37).

35. Apparatus according to any one of claims 1 to 34, characterised in that the sliver guide (2) has at least one ventilation opening (37).

36. Apparatus according to any one of claims 1 to 35, characterised in that the inlet (45) of the sliver guide (2) is of rectangular cross-section.

37. Apparatus according to any one of claims 1 to 36, characterised in that the outlet (27) of the sliver guide (2) is of rectangular cross-section.

38. Apparatus according to any one of claims 1 to 37, characterised in that the outlet (27) of the sliver guide (2) extends into the roller nip (29) between the draw-off rollers (4,5).

39. Apparatus according to any one of claims 1 to 38, characterised in that the side walls (40, 41, 42, 43) of the sliver guide (2) are tapered in the direction of travel of the slivers.

40. Apparatus according to any one of claims 1 to 39, characterised in that the base wall (42) and the cover wall (43) of the sliver guide (2) are tapered in the direction of travel of the slivers.

41. Apparatus according to any one of claims 1 to 40, characterised in that the position of the fixed-position wall element (41) lying opposite to the feeler element (22) can be altered, e.g. by an adjustment screw (38).

42. Apparatus according to any one of claims 1 to 41, characterised in that the feeler element (22) is trapezium-shaped.

43. Apparatus according to any one of claims 1 to 42, characterised in that the glide face (34) of the feeler element (22) is curved or rounded in a convex manner.

44. Apparatus according to any one of claims 1 to 43, characterised in that the inner face of the side wall of the sliver guide (2) is flush with the feeler element (22).

45. Apparatus according to any one of claims 1 to 44, characterised in that a mean value is provided by the individual thickness of the fibre slivers (3).

46. Apparatus according to any one of claims 1 to 45, characterised in that the fixed-position counter-face (41) is a glide face along which the fibre slivers (3) glide.

47. Apparatus according to any one of claims 1 to 46, characterised in that the glide face (34) of the feeler element (22) is straight in the longitudinal direction.

48. Apparatus according to any one of claims 1 to 47, characterised in that a pair of nip rollers (46, 47) is arranged upstream of the sliver guide (2).

49. Apparatus according to any one of claims 1 to 48, characterised in that the first pair of drawing rollers (10,11) is arranged downstream of the sliver guide (2) in the form of a pair of draw-off rollers.

50. Apparatus according to any one of claims 1 to 49, characterised in that the supply speed is approximately 150 m/min.

51. Apparatus according to any one of claims 1 to 50, characterised in that the drawing-off force is greater than the clamping force at the narrow zone (23).

52. Apparatus according to any one of claims 1 to 51, characterised in that the clamping force is smaller than the tear-off force.

53. Apparatus according to any one of claims 1 to 52, characterised in that at least the cover face (43) of the sliver guide (2) can be swung open and closed.

54. Apparatus according to any one of claims 1 to 53, characterised in that the cover face (43) is secured to a hinge (39).

55. Apparatus according to any one of claims 1 to 54, characterised in that the pair of rollers (4,5) is a pair of cylindrical calender rollers.

56. Apparatus according to any one of claims 1 to 55, for measuring the thickness of a fibre formation, having a sliver guide for guiding the fibre slivers at the inlet of a drawing system, which has a cover and base face, has side walls which taper and funnel laterally one next to another in one plane the slivers entering adjacent to one another, and has arranged downstream a pair of rollers after which the fibre slivers diverge again adjacent to one another, and in which apparatus there is a biased feeler element, the position of which is movable, that together with a fixed-position counter-face forms a narrow zone for the through-running fibre formation consisting of fibre slivers, a change in the position of which feeler element, when there is a different thickness of fibre formation, acts on a transducer to produce a control pulse, characterised in that the movable feeler element (22) is arranged in the sliver guide (2) in the region of the fibre slivers (3) funnelled one next to another in the narrow zone (23) and has a glide face (34) which presses the fibre slivers (3) compactly one next to another against the fixed-position counter-face (41) of the sliver guide (2), and the pair of rollers (4,5) draws off adjacent to one another the fibre slivers (3) pressed together and sensed in the narrow zone (23).

57. Apparatus according to any one of claims 1 to 56, characterised in that the edges of the sliver guide (2) are trimmed.

58. Apparatus according to any one of claims 1 to 57, characterised in that the sliver guide (2) is a cast article.

59. Apparatus according to any one of claims 1 to 58, characterised in that the contact faces (44) of the sliver guide (2) in contact with the fibre sliver (3) have a low coefficient of friction.

60. Apparatus according to any one of claims 1 to 59, characterised in that the glide face (34) of the feeler element (6) in contact with the fibre sliver (3) has a low coefficient of friction.

61. Apparatus according to any one of claims 1 to 60, characterised in that the sliver guide (2) is enamelled at least in the region of the contact faces (44).

62. Apparatus according to any one of claims 1 to 61, characterised in that the glide face (34) of the feeler element (6) is enamelled.

63. Apparatus according to any one of claims 1 to 62, characterised in that the sliver guide (2) consists of a glass.

64. Apparatus according to any one of claims 1 to 61, characterised in that the sliver guide (2) consists of a ceramic material.

65. Apparatus according to any one of claims 1 to 64, characterised in that at least the glide face (34) of the feeler element (6) consists of a glass.

66. Apparatus according to any one of claims 1 to 65, characterised in that at least the glide face (34) of the feeler element (6) consists of a ceramic material.

67. Apparatus according to any one of claims 1 to 66, characterised in that the ceramic material is a sintered ceramic.

68. Apparatus according to any one of claims 1 to 67, characterised in that the ceramic material is an oxide ceramic.

69. Apparatus according to any one of claims 1 to 62, characterised in that the sliver guide (2) consists of a metal or a metal alloy.

70. Apparatus according to any one of claims 1 to 69, characterised in that the contact faces (44) are polished.

71. Apparatus according to any one of claims 1 to 70, characterised in that the contact faces (44) are hardened.

72. Apparatus according to any one of claims 1 to 71, characterised in that the contact faces (44) consist of hard material inserts.

73. Apparatus according to any one of claims 1 to 72, characterised in that the sliver guide (2) is of essentially rectangular cross-section in the narrow zone (23).

74. Apparatus according to any one of claims 1 to 73, characterised in that the cross-section tapers in the direction of the feeler element (6).

75. Apparatus according to any one of claims 1 to 74, characterised in that at least one of the walls (40, 41, 42, 43) defining the cross-section is inclined towards the opposite wall to produce the taper of the cross-section.

76. Apparatus according to any one of claims 1 to 75, characterised in that the sliver guide (2) is essentially in the shape of a truncated pyramid.

77. Apparatus according to any one of claims 1 to 76, characterised in that the feeler element (6) engages through a narrow side (40, 41) of the sliver guide (2).

## Revendications

1. Dispositif pour mesurer l'épaisseur d'un ruban composite de fibres, comportant un guidage de ruban (2) pour guider les rubans de fibres (3) à l'entrée du banc d'étirage, dont les parois sont au moins partiellement coniques et réalisées de manière à réunir dans un plan les rubans de fibres rentrants, et en aval duquel est agencée une paire de cylindres (4, 5) après lesquels les rubans de fibres (3) divergent à nouveau, dans lequel est prévu un élément palpeur (22) chargé mobile qui forme conjointement avec une contre-surface fixe un étranglement pour le composite de fibres passant constitué en rubans de fibres et dont le changement de position agit, lorsque le ruban de fibres présente différentes épaisseurs, sur un dispositif convertisseur pour produire une impulsion de commande, caractérisé en ce que l'élément palpeur (22) est associé au guidage de ruban (2), en ce que le composite de fibres constitué de ruban de fibres (3) peut être comprimé et palpé dans un plan par l'élément palpeur (22) dans le guidage de ruban (2), et en ce que le composite de fibres palpé constitué de rubans de fibres (3) peut être tiré à par la paire de cylindres (4, 5).

2. Dispositif selon la revendication 1, caractérisé en ce que l'élément palpeur mobile (22) est associé au guidage de ruban (2) dans la région des rubans de fibres (3) réunis les uns à côté des autres dans l'étranglement (23), et présente une surface de coulissement (34) qui presse les rubans de fibres (3) les uns à côté des autres en les comprimant contre la contre-surface fixe (41) du guidage de ruban (2), et en ce que la paire de cylindres (4, 5) tire les rubans de fibres (3) les uns à côté des autres, qui sont comprimés et palpés dans l'étranglement.

3. Dispositif selon l'une ou l'autre des revendications 1 et 2, caractérisé en ce que la distance (a) entre l'élément palpeur mobile (22) et le point de serrage (26) de la paire des cylindres (4, 5) est égale ou inférieure à la longueur d'empilement du matériau de fibres.

4. Dispositif selon l'une quelconque des revendications 1 à 3, caractérisé en ce que la distance (b) entre la sortie (27) du guidage de ruban (2) et le point de serrage (26) de la paire des cylindres (4, 5) est égale ou inférieure à la longueur d'empilement du matériau de fibres.

5. Dispositif selon l'une quelconque des revendications 1 à 4, caractérisé en ce que l'élément palpeur (22) est mobile horizontalement et perpendiculairement par rapport à la direction de circulation du ruban.

6. Dispositif selon l'une quelconque des revendications 1 à 5, caractérisé en ce que l'élément palpeur (22) est mobile verticalement et perpendiculairement par rapport à la direction de circulation de ruban.

7. Dispositif selon l'une quelconque des revendications 1 à 6, caractérisé en ce que le guidage de ruban (2) présente au moins une ouverture (28), et l'élément palpeur (22) s'engage à travers l'ouverture (28).

8. Dispositif selon l'une quelconque des revendications 1 à 7, caractérisé en ce que la sortie (27) du guidage de ruban (2) se trouve directement en avant de la fente (29) des cylindres de tirage (4, 5).

9. Dispositif selon l'une quelconque des revendications 1 à 8, caractérisé en ce que l'étranglement (23) est agencé directement en avant de la sortie (27) du guidage de ruban (2).

10. Dispositif selon l'une quelconque des revendications 1 à 9, caractérisé en ce que la force de tirage est supérieure à la force de mesure.

11. Dispositif selon l'une quelconque des revendications 1 à 10, caractérisé en ce que l'ouverture (28) est un évidement (28').

12. Dispositif selon l'une quelconque des revendications 1 à 7, caractérisé en ce que l'évidement (28') est approximativement rectangulaire.

13. Dispositif selon l'une quelconque des revendications 1 à 12, caractérisé en ce que l'élément palpeur (22) est un élément palpeur approximativement rectangulaire, dont les grands côtés s'étendent dans la direction de la largeur et dont les petits côtés s'étendent dans la direction de travail.

14. Dispositif selon l'une quelconque des revendications 1 à 13, caractérisé en ce que l'extrémité extérieure de l'élément palpeur (22) est agencée à une faible distance de la sortie (27) du guidage de ruban (2) en direction des cylindres de tirage (4, 5).

15. Dispositif selon l'une quelconque des revendications 1 à 14, caractérisé en ce que l'élément palpeur (22) est monté sur un pivot fixe (30).

16. Dispositif selon l'une quelconque des revendications 1 à 15, caractérisé en ce qu'un levier (31) du montage pivotant (30) coopère avec un élément de force, par exemple un contrepoids, un ressort, ou similaire.

17. Dispositif selon l'une quelconque des revendications 1 à 16, caractérisé en ce que l'élément palpeur (22) est monté de façon mobile en direction horizontale.

18. Dispositif selon l'une quelconque des revendications 1 à 17, caractérisé en ce que l'élément palpeur (22) est monté par l'une de ses extrémités avec effet à ressort.

19. Dispositif selon l'une quelconque des revendications 1 à 18, caractérisé en ce que l'élément palpeur (22) est monté sur un organe de retenue, par exemple un levier.

20. Dispositif selon l'une quelconque des revendications 1 à 19, caractérisé en ce que l'élément palpeur (22) est monté en rotation autour d'un axe vertical.

21. Dispositif selon l'une quelconque des revendications 1 à 20, caractérisé en ce que l'élément palpeur (22) présente au moins un élément de mesure inductif (48) comportant un noyau plongeur et une bobine mobile.

22. Dispositif selon l'une quelconque des revendications 1 à 21, caractérisé en ce que l'élément de mesure est un détecteur de distance sans contact à fonctionnement analogique, par exemple un déclencheur de proximité inductif.

23. Dispositif selon l'une quelconque des revendications 1 à 22, caractérisé en ce qu'à l'élément palpeur (22) est associée une butée (33).

24. Dispositif selon l'une quelconque des revendications 1 à 23, caractérisé en ce que l'élément palpeur (22) est chargé et supporté par au moins une force.

25. Dispositif selon l'une quelconque des revendications 1 à 24, caractérisé en ce que l'étranglement (23) est réalisé à la manière d'un diaphragme d'appareil photographique, donc comme une fermeture à diaphragme comportant des surfaces de coulissement intérieures.

26. Dispositif selon l'une quelconque des revendications 1 à 25, caractérisé en ce que l'élément palpeur (22) monté de façon mobile traverse une traversée correspondante de la paroi du guidage de ruban (2) et charge par une surface de coulissement (34) le ruban composite de fibres respectif jusqu'à proximité de la section transversale de la substance.

27. Dispositif selon l'une quelconque des revendications 1 à 26, caractérisé en ce que l'étranglement (23) présente deux surfaces (35) parallèles l'une à l'autre, entre lesquelles est ajustée une partie de l'élément palpeur (22) monté de façon mobile.

28. Dispositif selon l'une quelconque des revendications 1 à 27, caractérisé en ce que la paroi (41) située en vis-à-vis de l'élément palpeur (22) monté de façon mobile s'étend perpendiculairement aux surfaces parallèles (35).

29. Dispositif selon l'une quelconque des revendications 1 à 28, caractérisé en ce que la précontrainte de l'élément palpeur (22) monté de façon mobile s'effectue par des moyens mécaniques, électriques, hydrauliques ou pneumatiques, par exemple des ressorts, des poids, par auto-élasticité, par des cylindres de charge, des aimants ou similaires, et en ce qu'elle peut être réglable.

30. Dispositif selon l'une quelconque des revendications 1 à 29, caractérisé en ce que l'élément palpeur (22) monté de façon mobile est réalisé sous forme d'un levier coudé qui est monté approximativement au point de pliage dans l'évidement (28) du guidage de ruban (2), et soit le levier coudé soit le guidage de ruban (2) est monté de manière fixe et le levier coudé est chargé par un ressort.

31. Dispositif selon l'une quelconque des revendications 1 à 30, caractérisé en ce que le ressort (32) chargeant le levier coudé (31) s'appuie par son extrémité libre contre un élément de butée (36) à réglage fin.

32. Dispositif selon l'une quelconque des revendications 1 à 31, caractérisé en ce que les axes des cylindres de tirage (4, 5) sont agencés horizontalement.

33. Dispositif selon l'une quelconque des revendications 1 à 32, caractérisé en ce que les axes des cylindres de tirage (4, 5) sont agencés verticalement.

34. Dispositif selon l'une quelconque des revendications 1 à 33, caractérisé en ce qu'en amont du guidage de ruban (2) est agencé un autre guidage de ruban (2'), la région entre les deux guidages de ruban (2, 2') étant en liaison avec l'air ambiant via au moins une ouverture (37).

35. Dispositif selon l'une quelconque des revendications 1 à 34, caractérisé en ce que le guidage de ruban (2) présente au moins une ouverture de mise à l'air (37).

36. Dispositif selon l'une quelconque des revendications 1 à 35, caractérisé en ce que l'entrée (45) du guidage de ruban (2) présente une section transversale rectangulaire.

37. Dispositif selon l'une quelconque des revendications 1 à 36, caractérisé en ce que la sortie (27) du guidage de ruban (2) présente une section transversale rectangulaire.

38. Dispositif selon l'une quelconque des revendications 1 à 37, caractérisé en ce que la sortie (27) du guidage de ruban (2) s'étend jusqu'à la fente (29) entre les cylindres de tirage (4, 5).

39. Dispositif selon l'une quelconque des revendications 1 à 38, caractérisé en ce que les parois latérales (40, 41, 42, 43) du guidage de ruban (2) sont réalisées de manière à converger coniquement dans la direction de circulation du ruban.

40. Dispositif selon l'une quelconque des revendications 1 à 39, caractérisé en ce que la paroi de fond (42) et la paroi de plafond (43) du guidage de ruban (2) sont réalisées de manière à converger coniquement dans la direction de circulation du ruban.

41. Dispositif selon l'une quelconque des revendications 1 à 40, caractérisé en ce que l'élément de paroi fixe (41) situé en vis-à-vis de l'élément palpeur (22) est variable en position, par exemple par une vis de réglage (38).

42. Dispositif selon l'une quelconque des revendications 1 à 41, caractérisé en ce que l'élément palpeur (22) est réalisé en forme de trapèze.

43. Dispositif selon l'une quelconque des revendications 1 à 42, caractérisé en ce que la surface de coulissement (34) de l'élément palpeur (22) est incurvée ou arrondie de façon convexe.

44. Dispositif selon l'une quelconque des revendications 1 à 43, caractérisé en ce que la surface intérieure de la paroi latérale du guidage de ruban (2) et l'élément palpeur (22) vont en se transformant l'un en l'autre en affleurement mutuel.

45. Dispositif selon l'une quelconque des revendications 1 à 44, caractérisé en ce qu'à partir de l'épaisseur individuelle des rubans de fibres (3) est formée une valeur moyenne.

46. Dispositif selon l'une quelconque des revendications 1 à 45, caractérisé en ce que la contre-surface fixe (41) est une surface de coulissement le long de laquelle glissent les rubans de fibres (3).

47. Dispositif selon l'une quelconque des revendications 1 à 46, caractérisé en ce que la surface de coulissement (34) de l'élément palpeur (22) est réalisée de façon rectiligne en direction longitudinale.

48. Dispositif selon l'une quelconque des revendications 1 à 47, caractérisé en ce qu'en amont du guidage de ruban (2) est agencée une paire de cylindres exprimeurs (46, 47).

49. Dispositif selon l'une quelconque des revendications 1 à 48, caractérisé en ce qu'en aval du guidage de ruban (2) est agencée la première paire de cylindres d'étirage (10, 11) sous forme de cylindres de tirage.

50. Dispositif selon l'une quelconque des revendications 1 à 49, caractérisé en ce que la vitesse d'amenée s'élève à environ 150 m/min.

51. Dispositif selon l'une quelconque des revendications 1 à 50, caractérisé en ce que la force de tirage est supérieure à la force de serrage au niveau de l'étranglement (23).

52. Dispositif selon l'une quelconque des revendications 1 à 51, caractérisé en ce que la force de serrage est inférieure à la force d'arrachement.

53. Dispositif selon l'une quelconque des revendications 1 à 52, caractérisé en ce qu'au moins la surface de plafond (43) du guidage de ruban (2) peut être dépliée et refermée.

54. Dispositif selon l'une quelconque des revendications 1 à 53, caractérisé en ce que la surface de plafond (43) est fixée sur une articulation tournante (39).

55. Dispositif selon l'une quelconque des revendications 1 à 54, caractérisé en ce que la paire de cylindres (4, 5) est une paire de calandres cylindriques.

56. Dispositif selon l'une quelconque des revendications I à 55, pour mesurer l'épaisseur d'un ruban composite de fibres, comportant un guidage de ruban pour guider les rubans de fibres à l'entrée du banc d'étirage, qui présente une surface de plafond et une surface de fond et dont les parois latérales sont coniques et réalisées de manière à réunir les rubans de fibres rentrants les uns à côté des autres dans un plan latéralement les uns à côté des autres, et en aval duquel est agencée une paire de cylindres après laquelle les rubans de fibres divergent à nouveau les uns à côté des autres, dans lequel est prévu un élément palpeur chargé mobile qui forme conjointement avec une contre-surface fixe un étranglement pour le composite de fibres passant constitué en rubans de fibres, et dont la modification en position agit, lors de différentes épaisseurs du ruban composite de fibres, sur un dispositif convertisseur pour produire une impulsion de commande, caractérisé en ce que l'élément palpeur mobile (22) du guidage de ruban (2) est associé dans la région des rubans de fibres (3) réunis les uns à côté des autres dans l'étranglement (23), et en ce qu'il présente une surface de coulissement (34) qui presse les rubans de fibres (3) les uns à côté des autres en les comprimant contre la contre-surface fixe (41) du guidage de ruban (2) et en ce que la paire de cylindres (4, 5) tire les rubans de fibres (3) les uns à côté des autres, qui sont comprimés et palpés dans l'étranglement.

57. Dispositif selon l'une quelconque des revendications 1 à 56, caractérisé en ce que les arêtes du guidage de ruban (2) sont ébarbées.

58. Dispositif selon l'une quelconque des revendications 1 à 57, caractérisé en ce que le guidage de ruban (2) est une pièce de fonderie.

59. Dispositif selon l'une quelconque des revendications 1 à 58, caractérisé en ce que les surfaces de contact (44) du guidage de ruban (2), qui sont en contact avec le ruban de fibres (3) présentent un coefficient de friction faible.

60. Dispositif selon l'une quelconque des revendications 1 à 59, caractérisé en ce que la surface de coulissement (34) de l'élément palpeur (6), qui est en contact avec le ruban de fibres (3) présente un coefficient de friction faible.

61. Dispositif selon l'une quelconque des revendications 1 à 60, caractérisé en ce que le guidage de ruban (2) est émaillé au moins dans la région des surfaces de contact (44).

62. Dispositif selon l'une quelconque des revendications 1 à 61, caractérisé en ce que la surface de coulissement (34) de l'élément palpeur (6) est émaillée.

63. Dispositif selon l'une quelconque des revendications 1 à 62, caractérisé en ce que le guidage de ruban (2) est constitué en verre.

64. Dispositif selon l'une quelconque des revendications 1 à 61, caractérisé en ce que le guidage de ruban (2) est constitué en céramique.

65. Dispositif selon l'une quelconque des revendications 1 à 64, caractérisé en ce qu'au moins la surface de coulissement (34) de l'élément palpeur (6) est constituée en verre.

66. Dispositif selon l'une quelconque des revendications 1 à 65, caractérisé en ce qu'au moins la surface de coulissement (34) de l'élément palpeur (6) est constituée en céramique.

67. Dispositif selon l'une quelconque des revendications 1 à 66, caractérisé en ce que la céramique est une céramique frittée.

68. Dispositif selon l'une quelconque des revendications 1 à 67, caractérisé en ce que la céramique est une céramique d'oxyde.

69. Dispositif selon l'une quelconque des revendications 1 à 62, caractérisé en ce que le guidage de ruban (2) est constitué en métal ou en un alliage métallique.

70. Dispositif selon l'une quelconque des revendications 1 à 69, caractérisé en ce que les surfaces de contact (44) sont polies.

71. Dispositif selon l'une quelconque des revendications 1 à 70, caractérisé en ce que les surfaces de contact (44) sont durcies.

72. Dispositif selon l'une quelconque des revendications 1 à 71, caractérisé en ce que les surfaces de contact (44) sont constituées par des inserts en substance dure.

73. Dispositif selon l'une quelconque des revendications 1 à 72, caractérisé en ce que le guidage de ruban (2) présente dans l'étranglement (23) une section transversale sensiblement rectangulaire.

74. Dispositif selon l'une quelconque des revendications 1 à 73, caractérisé en ce que la section transversale va en se rétrécissant en direction de l'élément palpeur (6).

75. Dispositif selon l'une quelconque des revendications 1 à 74, caractérisé en ce qu'au moins l'une des parois (40, 41, 42, 43) délimitant la section transversale est inclinée vers la paroi située à l'opposé pour le rétrécissement en section.

76. Dispositif selon l'une quelconque des revendications 1 à 75, caractérisé en ce que le guidage de ruban (2) présente sensiblement la forme d'un tronc de pyramide.

77. Dispositif selon l'une quelconque des revendications 1 à 76, caractérisé en ce que l'élément palpeur (6) traverse un petit côté (40, 41) du guidage de ruban (2).
